(19)

Europäisches
Patentamt
European
Patent Office
Office européen
des brevets

(11) **EP 4 390 843 A1**

(12) **EUROPEAN PATENT APPLICATION**
published in accordance with Art. 153(4) EPC

(43) Date of publication:
**26.06.2024 Bulletin 2024/26**

(21) Application number: **22868808.1**

(22) Date of filing: **07.07.2022**

(51) International Patent Classification (IPC):
***G06T 7/11*** *(2017.01)*

(52) Cooperative Patent Classification (CPC):
**G06T 5/92**

(86) International application number:
**PCT/CN2022/104317**

(87) International publication number:
**WO 2023/040431 (23.03.2023 Gazette 2023/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **15.09.2021 CN 202111080645**

(71) Applicant: **Huawei Technologies Co., Ltd.
Shenzhen, Guangdong 518129 (CN)**

(72) Inventors:
• **XU, Weiwei
  Shenzhen, Guangdong 518129 (CN)**
• **WEN, Jinsong
  Shenzhen, Guangdong 518129 (CN)**

• **WU, Lei
  Shenzhen, Guangdong 518129 (CN)**
• **MA, Zhongke
  Shenzhen, Guangdong 518129 (CN)**
• **JIA, Yanbing
  Shenzhen, Guangdong 518129 (CN)**
• **YU, Quanhe
  Shenzhen, Guangdong 518129 (CN)**
• **WANG, Zizhong
  Shenzhen, Guangdong 518129 (CN)**
• **WANG, Yichuan
  Shenzhen, Guangdong 518129 (CN)**
• **CHEN, Hu
  Shenzhen, Guangdong 518129 (CN)**

(74) Representative: **Gill Jennings & Every LLP
The Broadgate Tower
20 Primrose Street
London EC2A 2ES (GB)**

(54) **TONE MAPPING METHOD, DEVICE AND SYSTEM**

(57)    This application provides a tone mapping method and system, and a device, to provide a technical solution that can improve tone mapping effect. The method includes: obtaining a to-be-displayed image frame and metadata, where the metadata includes at least one metadata information unit; segmenting the to-be-displayed image frame into a plurality of segmentation regions in a target segmentation manner, and determining a correspondence between the plurality of segmentation regions and the at least one metadata information unit; and for an $i^{th}$ pixel: determining, for a plurality of pixels included in a preset region, at least one related segmentation region to which the plurality of pixels belong, and determining, based on the correspondence, a related metadata information unit corresponding to each related segmentation region; obtaining, based on the related metadata information unit, a tone mapping subvalue corresponding to the related segmentation region, and allocating a corresponding weighting factor to the related segmentation region; obtaining a tone mapping value based on the tone mapping subvalue corresponding to the related segmentation region and the weighting factor; and performing tone mapping based on the tone mapping value.

EP 4 390 843 A1

S501

Obtain a to-be-displayed image frame and metadata, where the metadata includes at least one metadata information unit

S502

Segment the to-be-displayed image frame into a plurality of segmentation regions in a target segmentation manner, and determine a correspondence between the plurality of segmentation regions and the at least one metadata information unit

S503

Determine, based on a plurality of pixels included in a preset region selected for the $i^{th}$ pixel, at least one related segmentation region to which the plurality of pixels belong, and determine, based on the correspondence, a related metadata information unit corresponding to each related segmentation region

For an $i^{th}$ pixel in the to-be-displayed image frame, perform the following operations:

S504

Obtain, based on the related metadata information unit, a tone mapping subvalue corresponding to each related segmentation region, and allocate a corresponding weighting factor to each related segmentation region

S505

Obtain a tone mapping value of the $i^{th}$ pixel based on the tone mapping subvalue corresponding to each related segmentation region and the weighting factor, and perform tone mapping on the $i^{th}$ pixel based on the tone mapping value

FIG. 5

**Description**

**CROSS-REFERENCE TO RELATED APPLICATIONS**

This application claims priority to Chinese Patent Application No. 202111080645.7, filed with the China National Intellectual Property Administration on September 15, 2021, and entitled "TONE MAPPING METHOD AND SYSTEM, AND DEVICE", which is incorporated herein by reference in its entirety.

**TECHNICAL FIELD**

This application relates to the field of display technologies, and in particular, to a tone mapping method and system, and a device.

**BACKGROUND**

With development of a capture end device, currently a high dynamic range (high dynamic range, HDR) video or image may be obtained through capture based on an HDR video technology. A displayable image luminance range is expanded in the HDR video or image, so that information of a large luminance range can be recorded, and more bright and dark details in the image can be displayed.

However, a display capability of an existing display end device is generally limited, and luminance range information recorded in an HDR video or image captured by a capture end device cannot be well displayed. For example, the capture end device may capture pixels whose maximum luminance is 10000 candelas/$m^2$ ($cd/m^2$, luminance unit), and the display end device may display only pixels whose maximum luminance is 4000 $cd/m^2$. In this case, pixels whose luminance is 4000 $cd/m^2$ to 10000 $cd/m^2$ in the HDR video or image captured by the capture end device may not be well displayed. A processing manner in which tone mapping (tone mapping, TM) may be performed on a to-be-displayed image is provided in a conventional technology, so that an image tone of a high dynamic range can be mapped to a display end device with a low dynamic range display capability.

In a conventional tone mapping manner, a local tone mapping manner based on a tone mapping curve or based on blocks or another manner may be mainly used, but a problem of poor tone mapping effect exists. Therefore, how to improve tone mapping effect is worth studying.

**SUMMARY**

This application provides a tone mapping method and system, and a device, to provide a technical solution that can improve tone mapping effect.

According to a first aspect, an embodiment of this application provides a tone mapping method, applied to a display end device. The method includes: obtaining a to-be-displayed image frame and metadata, where the metadata includes at least one metadata information unit; segmenting the to-be-displayed image frame into a plurality of segmentation regions in a target segmentation manner, and determining a correspondence between the plurality of segmentation regions and the at least one metadata information unit; and for an $i^{th}$ pixel in the to-be-displayed image frame, performing the following operations:

determining, based on a plurality of pixels included in a preset region selected for the $i^{th}$ pixel, at least one related segmentation region to which the plurality of pixels belong, and determining, based on the correspondence, a related metadata information unit corresponding to each related segmentation region; obtaining, based on the related metadata information unit, a tone mapping subvalue corresponding to each related segmentation region, and allocating a corresponding weighting factor to each related segmentation region; and obtaining a tone mapping value of the $i^{th}$ pixel based on the tone mapping subvalue corresponding to each related segmentation region and the weighting factor, and performing tone mapping on the $i^{th}$ pixel based on the tone mapping value, where i is any positive integer from 1 to N, and N is a quantity of pixels included in the to-be-displayed image frame.

In the method, a technical solution of performing fine local tone mapping on the to-be-displayed image frame is provided. For the pixels included in the to-be-displayed image frame, local tone mapping is implemented based on the preset region, so that display effect of the display end device on a tone-mapped to-be-displayed image frame can be improved.

In a possible design, the allocating a corresponding weighting factor to each related segmentation region includes one or a combination of the following manners:

method 1: separately determining a quantity of pixels belonging to the preset region in each related segmentation region and a total quantity of pixels corresponding to the preset region; and for a first related segmentation region, performing the following operation: allocating a corresponding first weighting factor to the first related segmentation region based on a quantity of pixels belonging to the preset region in the first related segmentation region and the total quantity of pixels, where the first related segmentation region is any one of the at least one related segmentation region; and/or

method 2: separately determining a preset feature value corresponding to the preset region in each related segmentation region; and for a second related segmentation region, performing the following operation: allocating a corresponding second weighting factor to the second related segmentation region based on a feature difference between a preset feature value corresponding to the preset region in the second related segmentation region and a preset feature value of the $i^{th}$ pixel, where the second related segmentation region is any one of the at least one related segmentation region.

In this design, corresponding weighting factors may be allocated to different related segmentation regions based on local features, for example, a quantity of pixels or a preset feature value, of the different related segmentation regions in the preset region corresponding to the pixels. The weighting factors are allocated, so that fine tone mapping of the pixels included in the to-be-displayed image frame can be implemented, tone mapping can be implemented based on an image feature of the to-be-displayed image frame, and display effect of the display end device on the tone-mapped to-be-displayed image frame can be improved.

In a possible design, the metadata further includes one or a combination of the following information: a first weighted strength value or a second weighted strength value; and the first weighted strength value is used to adjust the first weighting factor based on a pixel quantity distribution status of the to-be-displayed image frame; and the second weighted strength value is used to adjust the second weighting factor based on a preset feature value change status of the to-be-displayed image frame.

In this design, based on a global feature of the to-be-displayed image frame, weighting factors allocated to different segmentation regions may be further adjusted by using weighted strength values. For example, when image features of to-be-displayed image frames are similar, a large weighting factor may be allocated. When the image features of the to-be-displayed image frames are different, a small weighting factor may be allocated. In this way, boundary effect that may be generated by tone mapping can be reduced, and display effect of the display end device on the tone-mapped to-be-displayed image frame can be improved.

In a possible design, the preset feature value is one of the following feature values: a luminance feature value or a color feature value. There is at least one preset feature value. In this design, the preset feature value may be the luminance feature value or the color feature value. During actual implementation, the preset feature value may be determined based on the to-be-displayed image frame. For example, if a luminance feature is important to the to-be-displayed image frame, the luminance feature value may be selected. If a color feature of the to-be-displayed image frame is prominent, the color feature value may be selected. In addition, the design does not limit a quantity of preset feature values, so that tone mapping effect on the to-be-displayed image frame is improved.

In a possible design, the obtaining, based on the related metadata information unit, a tone mapping subvalue corresponding to each related segmentation region includes: obtaining, based on a tone mapping curve, a tone mapping subvalue corresponding to the $i^{th}$ pixel in the related segmentation region, where the related metadata information unit includes a parameter of the tone mapping curve.

In this design, each related segmentation region may correspond to a tone mapping curve, so that tone mapping for each related segmentation region can be implemented to obtain a plurality of tone mapping subvalues, and accuracy of the tone mapping subvalues can be improved to implement accurate tone mapping effect.

In a possible design, the preset region selected for the $i^{th}$ pixel is a region that is selected by using the $i^{th}$ pixel as a center and that is of a preset shape in a preset size; a region that is determined by using the $i^{th}$ pixel as a center and based on a preset shape and preset size information that is included in the metadata; or a region that is determined by using the $i^{th}$ pixel as a center and based on a preset shape and preset size information that are included in the metadata.

In this design, the preset region is selected by using a to-be-processed pixel (the $i^{th}$ pixel) as a center, and then fine local tone mapping is performed on the to-be-processed pixel based on the plurality of pixels included in the preset region, so that display effect of the display end device on the tone-mapped to-be-displayed image frame can be improved.

In a possible design, the determining a correspondence between the plurality of segmentation regions and the at least one metadata information unit includes: for any segmentation region, selecting a pixel at a preset location from the segmentation region, and obtaining coordinate information of the pixel at the preset location; determining, based on the coordinate information, a metadata information unit corresponding to the segmentation region; and establishing a correspondence between the segmentation region and the corresponding metadata information unit; or for any metadata information unit, determining, based on one or more pieces of coordinate information included in the metadata information unit, at least one segmentation region corresponding to the one or more pieces of coordinate information; and establishing a correspondence between the metadata information unit and the corresponding at least one segmentation region.

In this design, the coordinate information of the preset location is used as an index, so that the correspondence between the segmentation region and the metadata information unit can be accurately and easily determined, and the tone mapping subvalue of each related segmentation region can be separately calculated based on a related metadata information unit corresponding to a related segmentation region of a to-be-processed pixel.

In a possible design, the determining a correspondence between the plurality of segmentation regions and the at least one metadata information unit includes: traversing the plurality of segmentation regions based on a target scanning sequence and a segmentation region identifier, to determine a metadata information unit corresponding to each segmentation region, where the metadata information unit includes the corresponding segmentation region identifier, and the target scanning sequence is a preset scanning sequence or a scanning sequence that is indicated in the metadata.

In this design, the target scanning sequence may be further used, so that the correspondence between the segmentation region and the metadata information unit can be accurately and easily determined, and the tone mapping subvalue of each related segmentation region can be separately calculated based on a related metadata information unit corresponding to a related segmentation region of a to-be-processed pixel.

In a possible design, there is a one-to-one correspondence or a many-to-one correspondence between the plurality of segmentation regions and the at least one metadata information unit. In this design, there may be a one-to-one correspondence or a many-to-one correspondence between the plurality of segmentation regions and the at least one metadata information unit. Through the many-to-one correspondence, an information amount of metadata that needs to be transmitted between a capture end device and the display end device can be reduced, and metadata transmission efficiency can be improved.

In a possible design, the target segmentation manner is a preset segmentation manner or a segmentation manner that is indicated in the metadata. In this design, the target segmentation manner may be separately prestored by the capture end device and the display end device, or a segmentation manner used by the display end device may be indicated by the capture end device, so that accuracy of tone mapping between the capture end device and the display end device can be ensured.

According to a second aspect, an embodiment of this application provides a metadata generation method, applied to a capture end device. The method includes: capturing image data to obtain a to-be-displayed data frame; segmenting the to-be-displayed data frame into a plurality of segmentation regions in a target segmentation manner, and determining corresponding at least one metadata information unit for the plurality of segmentation regions; and sending the to-be-displayed data frame and metadata to a display end device, where the metadata includes the at least one metadata information unit.

In a possible design, the method further includes: determining a first weighted strength value based on a quantity of pixels respectively included in the plurality of segmentation regions; and/or determining a second weighted strength value based on a preset feature value respectively corresponding to the plurality of segmentation regions; and associating the first weighted strength value and/or the second weighted strength value with the metadata.

In a possible design, the preset feature value is one of the following feature values: a luminance feature value or a color feature value. There is at least one preset feature value.

In a possible design, the metadata information unit includes a parameter of a tone mapping curve corresponding to a segmentation region.

In a possible design, the metadata further includes preset size information, and the preset size information indicates a preset size of a preset shape used when a preset region is selected for a pixel; or the metadata further includes a preset shape and preset size information.

In a possible design, the determining corresponding at least one metadata information unit for the plurality of segmentation regions includes:
selecting a plurality of pixels at preset locations from the segmentation region, and obtaining coordinate information of the plurality of pixels at the preset locations; and associating the coordinate information with the metadata information unit.

In a possible design, the metadata information unit further includes a segmentation region identifier corresponding to the metadata information unit and a scanning sequence. The corresponding segmentation region identifier and the scanning sequence are used by the display end device to determine a correspondence between the plurality of segmentation regions and the at least one metadata information unit.

In a possible design, there is a one-to-one correspondence or a many-to-one correspondence between the plurality of segmentation regions and the at least one metadata information unit.

In a possible design, the method further includes: associating the target segmentation manner with the metadata, to indicate the display end device to segment the to-be-displayed data frame in the target segmentation manner.

According to a third aspect, an embodiment of this application provides a tone mapping processing apparatus. The apparatus includes a module configured to perform the method in any one of the first aspect or the possible implementations of the first aspect.

For example, the apparatus may include an obtaining module, a processing module, and a tone mapping module. The obtaining module is configured to obtain a to-be-displayed image frame and metadata, where the metadata includes at least one metadata information unit. The processing module is configured to segment the to-be-displayed image frame into a plurality of segmentation regions in a target segmentation manner, and determine a correspondence between the plurality of segmentation regions and the at least one metadata information unit. The tone mapping module is configured to: for an $i^{th}$ pixel in the to-be-displayed image frame, perform the following operations: determining, based on a plurality of pixels included in a preset region selected for the $i^{th}$ pixel, at least one related segmentation region to which the plurality of pixels belong, and determining, based on the correspondence, a related metadata information unit corresponding to each related segmentation region; obtaining, based on the related metadata information unit, a tone mapping subvalue corresponding to each related segmentation region, and allocating a corresponding weighting factor to each related segmentation region; and obtaining a tone mapping value of the $i^{th}$ pixel based on the tone mapping subvalue corresponding to each related segmentation region and the weighting factor, and performing tone mapping on the $i^{th}$ pixel based on the tone mapping value, where i is any positive integer from 1 to N, and N is a quantity of pixels included in the to-be-displayed image frame.

In a possible design, when configured to allocate a corresponding weighting factor to each related segmentation region, the tone mapping module is specifically configured to: separately determine a quantity of pixels belonging to the preset region in each related segmentation region and a total quantity of pixels corresponding to the preset region; and for a first related segmentation region, perform the following operation: allocating a corresponding first weighting factor to the first related segmentation region based on a quantity of pixels belonging to the preset region in the first related segmentation region and the total quantity of pixels, where the first related segmentation region is any one of the at least one related segmentation region; and/or separately determine a preset feature value corresponding to the preset region in each related segmentation region; and for a second related segmentation region, perform the following operation: allocating a corresponding second weighting factor to the second related segmentation region based on a feature difference between a preset feature value corresponding to the preset region in the second related segmentation region and a preset feature value of the $i^{th}$ pixel, where the second related segmentation region is any one of the at least one related segmentation region.

In a possible design, the metadata further includes one or a combination of the following information: a first weighted strength value or a second weighted strength value. The first weighted strength value is used to adjust the first weighting factor based on a pixel quantity distribution status of the to-be-displayed image frame. The second weighted strength value is used to adjust the second weighting factor based on a preset feature value change status of the to-be-displayed image frame.

In a possible design, the preset feature value is one of the following feature values: a luminance feature value or a color feature value. There is at least one preset feature value.

In a possible design, when configured to obtain, based on the related metadata information unit, a tone mapping subvalue corresponding to each related segmentation region, the tone mapping module is specifically configured to obtain, based on a tone mapping curve, a tone mapping subvalue corresponding to the $i^{th}$ pixel in the related segmentation region, where the related metadata information unit includes a parameter of the tone mapping curve.

In a possible design, the preset region selected for the $i^{th}$ pixel is a region that is selected by using the $i^{th}$ pixel as a center and that is of a preset shape in a preset size; a region that is determined by using the $i^{th}$ pixel as a center and based on a preset shape and preset size information that is included in the metadata; or a region that is determined by using the $i^{th}$ pixel as a center and based on a preset shape and preset size information that are included in the metadata.

In a possible design, when configured to determine a correspondence between the plurality of segmentation regions and the at least one metadata information unit, the processing module is specifically configured to: for any segmentation region, select a pixel at a preset location from the segmentation region, and obtain coordinate information of the pixel at the preset location; determine, based on the coordinate information, a metadata information unit corresponding to the segmentation region; and establish a correspondence between the segmentation region and the corresponding metadata information unit; or for any metadata information unit, determine, based on one or more pieces of coordinate information included in the metadata information unit, at least one segmentation region corresponding to the one or more pieces of coordinate information; and establish a correspondence between the metadata information unit and the corresponding at least one segmentation region.

In a possible design, when configured to determine a correspondence between the plurality of segmentation regions and the at least one metadata information unit, the processing module is specifically configured to traverse the plurality of segmentation regions based on a target scanning sequence and a segmentation region identifier, to determine a metadata information unit corresponding to each segmentation region, where the metadata information unit includes the corresponding segmentation region identifier, and the target scanning sequence is a preset scanning sequence or a scanning sequence that is indicated in the metadata.

In a possible design, there is a one-to-one correspondence or a many-to-one correspondence between the plurality of segmentation regions and the at least one metadata information unit.

In a possible design, the target segmentation manner is a preset segmentation manner or a segmentation manner that is indicated in the metadata.

According to a fourth aspect, an embodiment of this application provides a tone mapping apparatus. The apparatus includes a module configured to perform the method according to any one of the second aspect or the possible implementations of the second aspect.

For example, the apparatus may include a capture module, a processing module, and a transceiver module. The capture module is configured to capture image data to obtain a to-be-displayed data frame. The processing module is configured to segment the to-be-displayed data frame into a plurality of segmentation regions in a target segmentation manner, and determine corresponding at least one metadata information unit for the plurality of segmentation regions. The transceiver module is configured to send the to-be-displayed data frame and metadata to a display end device, where the metadata includes the at least one metadata information unit.

In a possible design, the processing module is further configured to: determine a first weighted strength value based on a quantity of pixels respectively included in the plurality of segmentation regions; and/or determine a second weighted strength value based on a preset feature value respectively corresponding to the plurality of segmentation regions; and associate the first weighted strength value and/or the second weighted strength value with the metadata.

In a possible design, the preset feature value is one of the following feature values: a luminance feature value or a color feature value. There is at least one preset feature value.

In a possible design, the metadata information unit includes a parameter of a tone mapping curve corresponding to a segmentation region.

In a possible design, the metadata further includes preset size information, and the preset size information indicates a preset size of a preset shape used when a preset region is selected for a pixel; or the metadata further includes a preset shape and preset size information.

In a possible design, when configured to determine corresponding at least one metadata information unit for the plurality of segmentation regions, the processing module is specifically configured to: select a plurality of pixels at preset locations from the segmentation region, and obtain coordinate information of the plurality of pixels at the preset locations; and associate the coordinate information with the metadata information unit.

In a possible design, the metadata information unit further includes a segmentation region identifier corresponding to the metadata information unit and a scanning sequence. The corresponding segmentation region identifier and the scanning sequence are used by the display end device to determine a correspondence between the plurality of segmentation regions and the at least one metadata information unit.

In a possible design, there is a one-to-one correspondence or a many-to-one correspondence between the plurality of segmentation regions and the at least one metadata information unit.

In a possible design, the processing module is further configured to associate the target segmentation manner with the metadata, to indicate the display end device to segment the to-be-displayed data frame in the target segmentation manner.

According to a fifth aspect, an embodiment of this application provides a display end device, including a nonvolatile memory and a processor that are coupled to each other. The processor invokes program code stored in the memory to perform the method according to any one of the first aspect or the possible implementations of the first aspect.

According to a sixth aspect, an embodiment of this application provides a capture end device, including a nonvolatile memory and a processor that are coupled to each other. The processor invokes program code stored in the memory to perform the method according to any one of the second aspect or the possible implementations of the second aspect.

According to a seventh aspect, an embodiment of this application provides a computer-readable storage medium, including a program or instructions. When the program or the instructions are run on a computer, the method according to any one of the first aspect or the possible implementations of the first aspect is performed, or the method according to any one of the second aspect or the possible implementations of the second aspect is performed.

It should be understood that for details of technical effects that can be achieved in the second aspect to the seventh aspect, refer to descriptions of technical effects brought by any one of the first aspect or the possible implementations of the first aspect. Details are not described herein again.

## BRIEF DESCRIPTION OF DRAWINGS

FIG. 1 is a schematic diagram of a relationship of a PQ optical electro transfer function;
FIG. 2 is a schematic diagram of a relationship of an HLG optical electro transfer function;
FIG. 3 is a schematic diagram of a relationship of an SLF optical electro transfer function;
FIG. 4 is a schematic diagram of a possible system architecture to which an embodiment of this application is applicable;
FIG. 5 is a schematic flowchart of a tone mapping method according to an embodiment of this application;

FIG. 6 is a schematic diagram of segmentation in a segmentation manner A according to an embodiment of this application;

FIG. 7 is a schematic diagram of segmentation in a segmentation manner B according to an embodiment of this application;

FIG. 8 is a schematic diagram of segmentation in a segmentation manner C according to an embodiment of this application;

FIG. 9 is a schematic diagram of a scanning sequence according to an embodiment of this application;

FIG. 10 is a schematic diagram of determining a related segmentation region according to an embodiment of this application;

FIG. 11 is another schematic diagram of determining a related segmentation region according to an embodiment of this application;

FIG. 12 is a schematic diagram of a luminance feature value according to an embodiment of this application;

FIG. 13 is another schematic flowchart of a tone mapping method according to an embodiment of this application;

FIG. 14 is a schematic diagram of a structure of a tone mapping apparatus according to an embodiment of this application;

FIG. 15 is another schematic diagram of a structure of a tone mapping apparatus according to an embodiment of this application; and

FIG. 16 is a schematic diagram of a structure of an electronic device according to an embodiment of this application.

## DESCRIPTION OF EMBODIMENTS

In embodiments of this application, the term "at least one" indicates one or more, and "a plurality of" indicates two or more. "And/or" describes an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects. At least one of the following items (pieces) or a similar expression thereof refers to any combination of these items, including any combination of singular items (pieces) or plural items (pieces). For example, at least one item (piece) of a, b, or c may indicate: a, b, c, a and b, a and c, b and c, or a, b, and c. Any one of a, b, c, a and b, a and c, b and c, or a, b, and c may include singular a, singular b, and singular c, or may include plural a, plural b, and plural c.

In addition, unless otherwise stated, ordinal numbers such as "first" and "second" in embodiments of this application are for distinguishing between a plurality of objects, but are not intended to limit an order, a time sequence, priorities, or importance of the plurality of objects. For example, a first priority criterion and a second priority criterion are merely used to distinguish between different criteria, but do not indicate different content, priorities, importance, or the like of the two criteria.

In addition, the terms "include" and "have" in embodiments of this application, the claims, and the accompanying drawings are not exclusive. For example, a process, a method, a system, a product, or a device including a series of steps or modules/units is not limited to the listed steps or modules, and may further include steps or modules/units that are not listed.

In the field of digital image display, a dynamic range (dynamic range) may represent a ratio of a maximum grayscale value to a minimum grayscale value within a displayable image range. Currently, in most color digital images, each of channels R, G, and B is stored by using one byte, that is, 8 bits. To be specific, when a representation range of each channel is grayscale levels from 0 to 255, a dynamic range of an image is 0 to 255. However, a dynamic range in a same scene in a real world is generally $10^{-3}$ to $10^6$, and may be referred to as a high dynamic range (high dynamic range, HDR). Compared with the high dynamic range, a dynamic range of a common image is referred to as a low dynamic range (low dynamic range, LDR), and the LDR is generally 1 to 100. Therefore, it may be understood that an imaging process of a digital camera is actually a mapping process from a high dynamic range for the real world to a low dynamic range for a photo.

A larger dynamic range of an image indicates more scene details and richer luminance levels that are shown by the image and more vivid visual effect.

An optical digital imaging process (for example, the imaging process of the digital camera and a video playback process) is converting light radiation of a real scene into electrical signals by using an image sensor and performing storage in a form of a digital image. Image display aims to reproduce, by using a display end device, a real scene described by a digital image. An ultimate objective of the optical digital imaging process and the image display is to enable a user to obtain visual perception the same as that obtained when the user directly observes the real scene. Luminance levels that can be demonstrated by optical radiation (optical signals) for the real scene are almost linear. Therefore, the optical signal is also referred to as a linear signal. However, in a process of converting an optical signal into an electrical signal in optical digital imaging, not every optical signal corresponds to one electrical signal. In addition, an electrical signal obtained through conversion is generally nonlinear. Therefore, the electrical signal is also referred to as a nonlinear signal. A curve of converting an optical signal into an electrical signal is an optical electro transfer function (optical electro transfer function, OETF). The optical electro transfer function in embodiments of this application may include but is not limited to a perceptual quantizer (perceptual quantizer, PQ) optical electro transfer function, a hybrid log-gamma (hybrid log-gamma, HLG) optical electro transfer function, a scene luminance fidelity (scene luminance fidelity, SLF) optical electro transfer function, and the like.

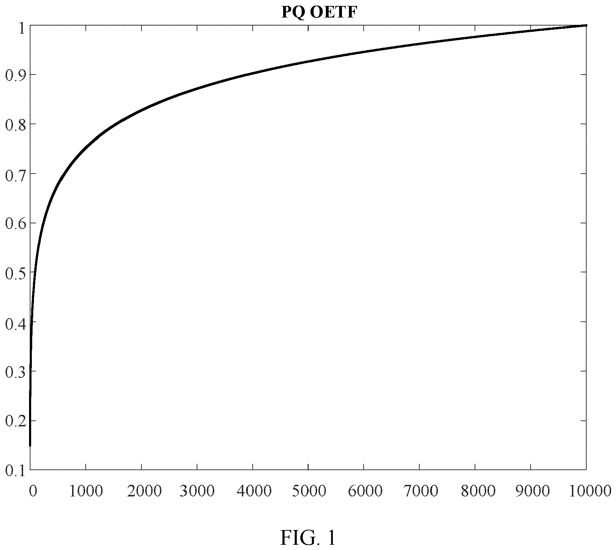

The PQ optical electro transfer function is a perceptual quantizer optical electro transfer function provided based on a luminance perception model for human eyes. The PQ optical electro transfer function indicates a conversion relationship from a linear signal value of an image pixel to a nonlinear signal value of a PQ domain. FIG. 1 is a schematic diagram of a relationship of a PQ optical electro transfer function. The PQ optical electro transfer function can be expressed as Equation (1-1):

$$\begin{cases} R^{'} = PQ\_TF(max(0, min(R/10000, 1))) \\ G^{'} = PQ\_TF(max(0, min(G/10000, 1))) \\ B^{'} = PQ\_TF(max(0, min(B/10000, 1))) \end{cases} \tag{1-1}$$

Parameters in the equation (1-1) are obtained through calculation according to the following equation:

$$L^{'} = PQ\_TF(L) = \left( \frac{c_1 + c_2 L^{m_1}}{1 + c_3 L^{m_1}} \right)^{m_2}$$

L indicates the linear signal value, and the value is normalized to [0, 1].
L, indicates the nonlinear signal value, and a range of the value is [0, 1].

$$m_1 = \frac{2610}{4096} \times \frac{1}{4} = 0.15930175 \ 78125$$

, and mi is a PQ optical electro transfer coefficient.

$$m_2 = \frac{2523}{4096} \times 128 = 78.84375$$

, and $m_2$ is a PQ optical electro transfer coefficient.

$$c_1 = c_3 - c_2 + 1 = \frac{3424}{4096} = 0.8359375$$

, and $c_1$ is a PQ optical electro transfer coefficient.

$$c_2 = \frac{2413}{4096} \times 32 = 18.8515625$$

, and $c_2$ is a PQ optical electro transfer coefficient.

$$c_3 = \frac{2392}{4096} \times 32 = 18.6875$$

, and $c_3$ is a PQ optical electro transfer coefficient.
The HLG optical electro transfer function is obtained through an improvement on a conventional gamma curve.

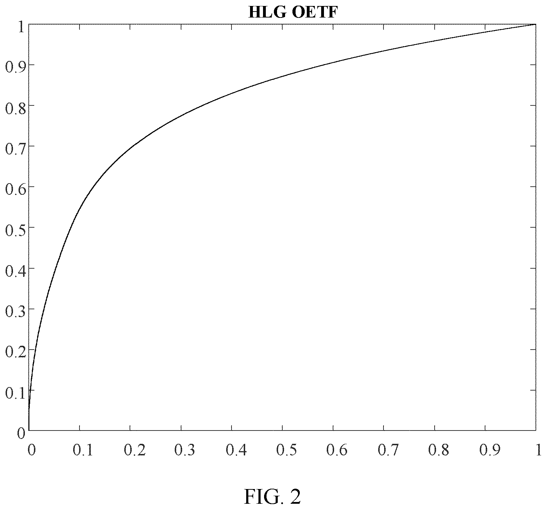

For the HLG optical electro transfer function, the conventional gamma curve is used in the lower half region, and a log curve is added to the upper half region. FIG. 2 is a schematic diagram of a relationship of an HLG optical electro transfer function. The HLG optical electro transfer function indicates a conversion relationship from a linear signal value of an image pixel to a nonlinear signal value of an HLG domain. The HLG optical electro transfer function may be expressed as Equation (1-2):

$$L^{'} = \text{HLG\_TF}(L) = \begin{cases} \sqrt{L}/2, \, 0 \leq L \leq 1 \\ a\ln(L-b)+c, \, 1 < L \end{cases} \qquad (1\text{-}2)$$

L indicates the linear signal value, and a range of the value is [0, 12]. I, indicates the nonlinear signal value, and a range of the value is [0, 1]. a=0.17883277, indicating an HLG optical electro transfer coefficient. b=0.28466892, indicating an HLG optical electro transfer coefficient. c=0.55991073, indicating an HLG optical electro transfer coefficient.

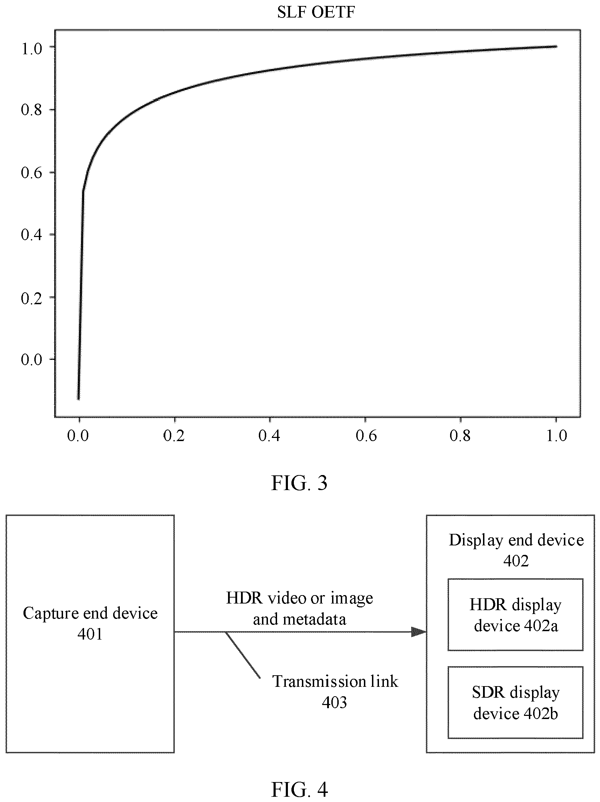

The SLF optical electro transfer function is an optimal curve obtained based on luminance distribution in an HDR scene when optical characteristics of human eyes are satisfied. FIG. 3 is a schematic diagram of a relationship of an SLF optical electro transfer function.

An SLF optical electro transfer curve indicates a conversion relationship from a linear signal value of an image pixel to a nonlinear signal value of an SLF domain. The conversion relationship from the linear signal value of the image pixel to the nonlinear signal value of the SLF domain is expressed as Equation (1-3):

$$\begin{cases} R^{'} = \text{SLF\_TF}(\max(0, \min(R/10000, 1))) \\ G^{'} = \text{SLF\_TF}(\max(0, \min(G/10000, 1))) \\ B^{'} = \text{SLF\_TF}(\max(0, \min(B/10000, 1))) \end{cases} \qquad (1\text{-}3)$$

The SLF optical electro transfer function can be expressed as Equation (1-4):

$$L' = \text{SLF\_TF}(L) = a \times \left(\frac{p \times L}{(p-1) \times L+1}\right)^{m} + b \qquad (1\text{-}4)$$

L indicates the linear signal value, and the value is normalized to [0, 1]. I, indicates the nonlinear signal value, and a range of the value is [0, 1]. p=2.3, indicating an SLF optical electro transfer coefficient. m=0.14, indicating an SLF optical electro transfer coefficient. a= 1.12762, indicating an SLF optical electro transfer coefficient. b=-0.12762, indicating an SLF optical electro transfer coefficient.

Currently, a capture end device can capture an HDR video or image with a larger dynamic range (in the following embodiment, an image is used as an example for description, and it may be understood that a video may be represented as a plurality of frames of images). However, a display capability of a display end device is limited, and cannot well match the dynamic range of the capture end device. A processing manner in which tone mapping (tone mapping, TM) may be performed on a to-be-displayed image is provided in a conventional technology, so that matching of the image in different dynamic ranges can be implemented. For example, tone mapping may be classified from a high dynamic range to a low dynamic range, or from a low dynamic range to a high dynamic range. For example, the HDR image captured by the capture end device includes a 4000-nit (nit, illumination signal unit) illumination signal, and the HDR display capability of the display end device (for example, a television set or a mobile phone) is only 500 nits. In this case, the 4000-nit signal needs to be mapped to the 500-nit device. That is, the tone mapping process is from high to low. For another example, the HDR image includes a 100-nit SDR signal, and the display capability of the target display end device is only 2000 nits. In this case, the 100-nit signal needs to be mapped to the 2000-nit device. That is, the tone mapping process is from low to high.

Tone mapping is generally applied to matching between a high-level HDR image captured by the capture end device and a low-level HDR image or an SDR image displayed by the display end device. FIG. 4 is a schematic diagram of a possible system architecture to which an embodiment of this application is applicable. The system architecture in this embodiment of this application may include a capture end device 401, a display end device 402, and a transmission link 403. The display end device 402 may be further specifically classified into an HDR display device 402a and an SDR display device 402b.

The capture end device 401 is configured to capture or produce an HDR video or image. For example, the capture end device 401 may be a video (or an image) capture device, or may be a video (or an image) production device.

In a possible example, the capture end device 401 may further generate metadata (metadata) based on the HDR video or image. The metadata is used to record key information of the captured image in a scene or frame. In this embodiment of this application, the metadata may include a parameter of a tone mapping curve, dynamic metadata (dynamic metadata), static metadata (static metadata), and the like. The dynamic metadata may be understood as data associated with each frame of image, and the data may change with different images, for example, an average value, a maximum value, and a minimum value of pixel luminance in a scene. The static metadata may be understood as data associated with an image sequence, and the data remains unchanged in the image sequence.

The capture end device 401 may transmit the HDR video or image, that is, the metadata data, to the display end device 402 through the transmission link 403. Specifically, the HDR video or image and the metadata may be transmitted in a form of one data packet, or separately transmitted in two data packets. This is not specifically limited in embodiments of this application.

The display end device 402 may be configured to receive the metadata and the HDR video or image, determine the tone mapping curve based on the parameter of the tone mapping curve included in the metadata, and perform tone mapping on the HDR image based on the tone mapping curve, to convert the HDR image into display content applicable to the display end device 402. The display end device 402 may be classified into the HDR display device 402a and the SDR display device 402b. It should be noted that an HDR of the display end device 402 may be different from an HDR of the capture end device 401. Generally, the HDR of the display end device 402 is lower than the HDR of the capture end device 401. For example, the HDR of the capture end device 401 is $10^{-3}$ to $10^4$ (which may also be referred to as a "high-level HDR" in this embodiment of this application). The HDR of the display end device 402 is $10^{-1}$ to $10^3$ (which may also be referred to as a "low-level HDR" in this embodiment of this application). It should be further understood that, in different embodiments, the display end device 402 may further include a display end device that has a display capability of a higher dynamic range than the HDR video or image generated by the capture end device 401. A display matching process of the display end device may also be applied to the system architecture. This is not limited in this application.

Based on the content introduced in the background, a conventional tone mapping manner may mainly use a local tone mapping manner based on a tone mapping curve or based on blocks, but a problem of poor tone mapping effect exists. For example, in the manner based on the tone mapping curve, tone mapping is generally implemented based on a single local window. When local processing is performed by using a single shape, boundary effect may exist.

In view of this, an embodiment of this application provides a tone mapping method, to design a technical solution that can improve tone mapping effect. The following describes the method provided in this embodiment of this application with reference to the accompanying drawings.

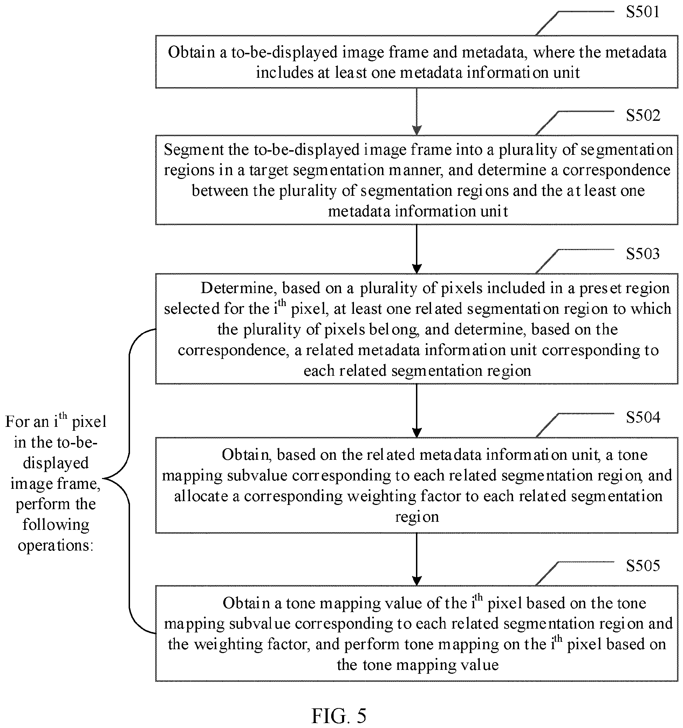

FIG. 5 is a schematic flowchart of a tone mapping method applicable to a display end device 402 according to an embodiment of this application. The process shown in FIG. 5 includes the following steps.

Step 501: The display end device 402 obtains a to-be-displayed image frame and metadata, where the metadata includes at least one metadata information unit. It should be understood that the to-be-displayed image frame may be an image, or may be any image frame in a plurality of image frames included in a video. In addition, the to-be-displayed image frame may be data sent by the capture end device 401, or may be data obtained through another image processing procedure, for example, global tone mapping. The metadata may be generated by the capture end device 401 based on the captured to-be-displayed image frame. A specific implementation of generating the metadata is described in a subsequent processing procedure of the capture end device 401. Details are not described herein.

Step 502: The display end device 402 segments the to-be-displayed image frame into a plurality of segmentation regions in a target segmentation manner, and determines a correspondence between the plurality of segmentation regions and the at least one metadata information unit.

The target segmentation manner may be a preset segmentation manner, or may be a segmentation manner indicated in the metadata. Optionally, the preset segmentation manner may be preset by the display end device 402. It should be understood that, to obtain accurate metadata, a same preset segmentation manner may be preset for the capture end device 401 and the display end device 402 in this scene. Alternatively, optionally, to implement a same segmentation manner for the capture end device 401 and the display end device 402, a target segmentation manner of the display end device 402 may be indicated in the metadata by the capture end device 401.

For example, this embodiment of this application provides the following several possible segmentation manners. It should be understood that the following segmentation manners are not limited during implementation.

In a segmentation manner A, the display end device 402 evenly segments the to-be-displayed image frame into a plurality of rectangular segmentation regions based on first segmentation parameters respectively corresponding to a first direction and a second direction. The first direction is perpendicular to the second direction. Optionally, the first segmentation parameter may be a segmentation quantity. In this case, the plurality of segmentation regions obtained through segmentation are represented as rectangular regions in an equal size.

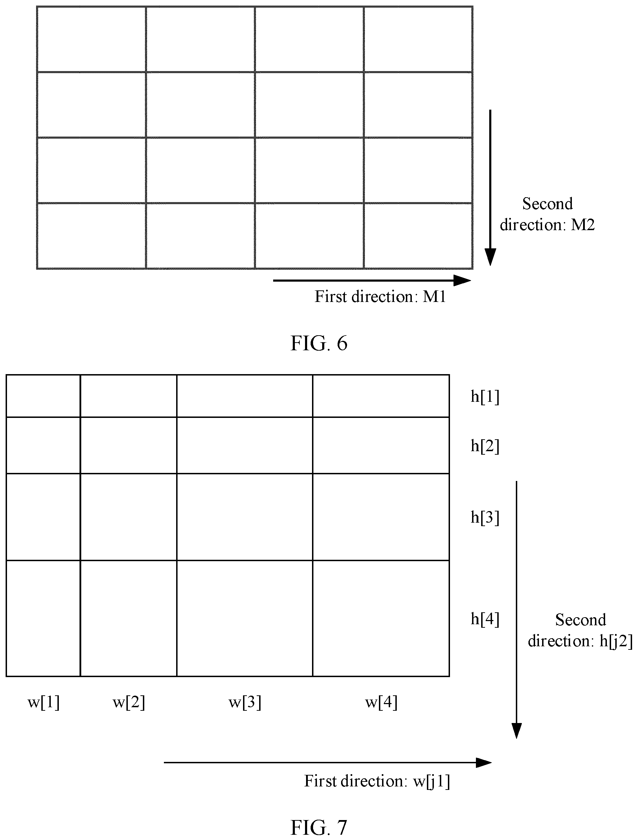

FIG. 6 is a schematic diagram of segmentation in a segmentation manner A according to an embodiment of this application. The first direction may be a horizontal direction, and the second direction may be a vertical direction. It is assumed that a segmentation quantity in the first direction is represented by M1 (a value of M1 is generally≤16), and a segmentation quantity in the second direction is represented by M2 (a value of M2 is generally≤16). In FIG. 6, in an example in which the value of M1 is 4 and the value of M2 is also 4, the to-be-displayed image frame may be segmented into 16 segmentation regions, namely, 16 rectangular regions in an equal size. It should be understood that the value of M1 and the value of M2 may be the same or different. For example, the value of M1 may be 6, and the value of M2 may be 4.

In a segmentation manner B, the display end device 402 segments the to-be-displayed image frame into a plurality of rectangular segmentation regions based on second segmentation parameters respectively corresponding to a first direction and a second direction. Optionally, the second segmentation parameter may be a segmentation list. In this case, the plurality of segmentation regions obtained through segmentation are represented as rectangular regions in any size.

FIG. 7 is a schematic diagram of segmentation in a segmentation manner B according to an embodiment of this application. It is assumed that a segmentation list in the first direction is represented as w[j1] (j1 may range from 1 to M1, and M1 indicates a segmentation quantity in the first direction), and a segmentation list in the second direction is represented as h[j2] (j2 may range from 1 to M2, and M2 indicates a segmentation quantity in the second direction). In FIG. 7, a value of M1 is 4, and a value of M2 is also 4. For example, every two values of w[1], w[2], w[3], and w[4] included in FIG. 7 may be the same or different. Every two values of h[1], h[2], h[3], and h[4] included in FIG. 7 may be the same or different.

In a segmentation manner C, the display end device 402 performs clustering on pixels included in the to-be-displayed image frame, and segments the to-be-displayed image frame into a plurality of irregular segmentation regions based on a clustering result, where each irregular segmentation region includes at least one type of pixel.

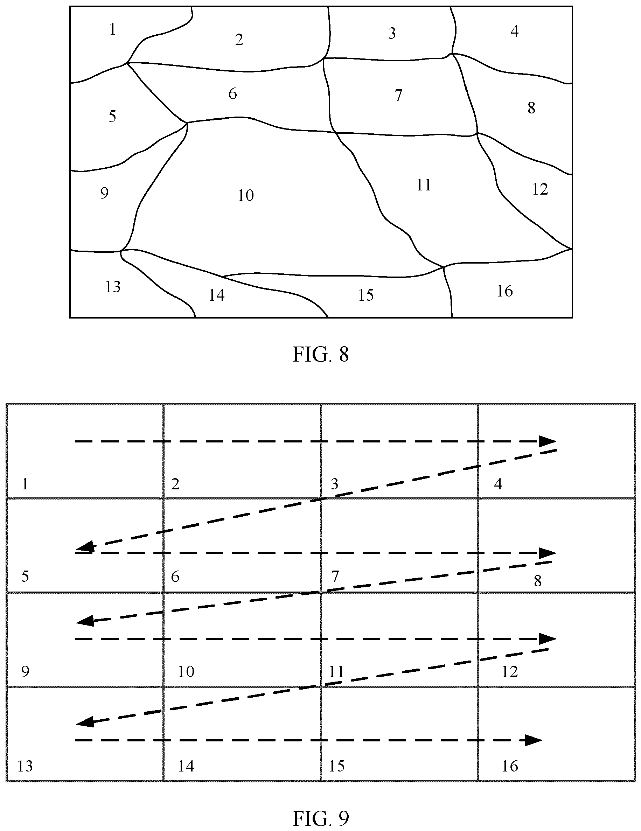

FIG. 8 is a schematic diagram of segmentation in a segmentation manner C according to an embodiment of this application. During implementation of this application, a target clustering manner may be selected from a plurality of optional clustering manners to perform clustering processing on the to-be-displayed image frame. A specific clustering manner is not limited in this application. For example, the to-be-displayed image frame obtained through clustering processing may be segmented into 16 segmentation regions shown in FIG. 8. For example, when performing clustering on the to-be-displayed image frame, the display end device 402 may first segment the to-be-displayed image frame into the plurality of rectangular regions based on the first segmentation parameter or the second segmentation parameter described above; then determine coordinate information and feature information (the feature information is, for example, a color component value) of a central pixel of each rectangular region; and perform clustering analysis on each pixel included in the to-be-displayed image frame and each central pixel to obtain a clustering result. Finally, the schematic diagram of segmentation shown in FIG. 8 is obtained based on clustering result.

In addition, to facilitate clustering analysis and reduce a processing amount of clustering processing, during implementation of this application, when image segmentation is performed on the to-be-displayed image frame, image segmentation processing may be further performed with reference to the thumbnailed to-be-displayed image frame. For example, 1/N1 of resolution in the first direction and 1/N2 of resolution in the second direction of the captured to-be-displayed image frame may be selected for the thumbnailed to-be-displayed image frame. In this way, clustering analysis is performed based on the thumbnailed to-be-displayed image frame, so that a quantity of pixels in the clustering processing process can be reduced.

It should be noted that, during implementation of this application, an appropriate segmentation manner may be selected for images with different features. For example, the segmentation manner A may be applicable to a case in which the to-be-displayed image frame is an image frame whose local features are not obvious, for example, a pure color image frame or a regular image, or may be applicable to any image frame. This is not limited in this application. The segmentation manner C may be applicable to an image frame with a specific local feature or the like. It may be understood that the display end device 402 and/or the capture end device 401 may prestore a plurality of segmentation manners, and may further select a corresponding target segmentation manner based on image frames with different features.

After obtaining the plurality of segmentation regions, the display end device 402 determines, based on the at least one metadata information unit included in the metadata, a metadata information unit corresponding to each segmentation region. Therefore, the parameter of the tone mapping curve, the dynamic metadata, the static metadata, and the like that correspond to the segmentation region may be obtained from the metadata information unit. Optionally, there may be a one-to-one correspondence between the plurality of segmentation regions and the at least one metadata information unit. That is, each segmentation region may correspond to one metadata information unit. For example, in FIG. 8, the 16 segmentation regions may correspond to 16 metadata information units. Alternatively optionally, there may be a many-to-one correspondence between the plurality of segmentation regions and the at least one metadata information unit. That is, one or more segmentation regions may correspond to one metadata information unit. For example, in FIG. 8, a segmentation region 1 and a segmentation region 2 may correspond to one metadata information unit, and a segmentation region 3 and a segmentation region 4 may correspond to one metadata information unit, and the like. It may be understood that through the many-to-one correspondence, a data amount of the metadata transmitted between the capture end device 401 and the display end device 402 can be reduced, and data transmission efficiency can be improved.

For example, this embodiment of this application provides the following several possible examples of determining the correspondence between the plurality of segmentation regions and the at least one metadata information unit. It should be understood that the following examples are not limited during implementation.

Example 1: The capture end device 401 may indicate a corresponding segmentation region identifier in a metadata information unit.

Optionally, the segmentation region identifier may be a quantity of segmentation regions included in the metadata information unit. During implementation, the display end device 402 may traverse, based on a target scanning sequence and the quantity of segmentation regions, the plurality of segmentation regions included in the to-be-displayed image frame. The target scanning sequence includes but is not limited to: from left to right and then from top to bottom, from top to bottom and then from left to right, and the like. In addition, the target scanning sequence may be a preset scanning sequence, or may be a scanning sequence indicated in the metadata. It should be understood that the display end device 402 and the capture end device 401 use a same preset scanning sequence.

For example, FIG. 9 is a schematic diagram of a scanning sequence according to an embodiment of this application. The shown scanning sequence is from left to right and then from top to bottom. It is assumed that 16 segmentation regions corresponding to FIG. 9 correspond to three metadata information units. A first metadata information unit corresponds to four segmentation regions, a second metadata information unit corresponds to seven segmentation regions, and a third metadata information unit corresponds to five segmentation regions. In this case, the correspondence between the plurality of segmentation regions and the at least one metadata information unit may be described in the following Table 1-1.

**Table 1-1**

| Segmentation region identifier | Metadata information unit identifier |
|---|---|
| 4 | First metadata information unit |
| 7 | Second metadata information unit |
| 5 | Third metadata information unit |

Based on the correspondence described in the foregoing Table 1-1, the display end device 402 may determine, based on the target scanning sequence, that the first metadata information unit corresponds a segmentation region 1 to a segmentation region 4, the second metadata information unit corresponds to a segmentation region 5 to a segmentation region 11, and the third metadata information unit corresponds to a segmentation region 12 to a segmentation region 16.

Alternatively optionally, the segmentation region identifier may be segmentation region sequence number information. During implementation, the display end device 402 may determine, based on the segmentation region sequence number information included in the metadata information unit, the segmentation region corresponding to the metadata information unit.

For example, content shown in FIG. 9 is used. In this example, the correspondence between the plurality of segmentation regions and the at least one metadata information unit may be described in the following Table 1-2.

**Table 1-2**

| Segmentation region identifier | Metadata information unit identifier |
|---|---|
| Segmentation region 1 to segmentation region 4 | First metadata information unit |
| Segmentation region 5 to segmentation region 11 | Second metadata information unit |
| Segmentation region 12 to segmentation region 16 | Third metadata information unit |

Based on the correspondence described in the foregoing Table 1-2, the display end device 402 may directly determine the corresponding segmentation region based on the segmentation region sequence number information included in the metadata information unit.

Example 2: For any segmentation region, the display end device 402 may further select one or more pixels at a preset location from the segmentation region, and obtain coordinate information of the one or more pixels at the preset location; determine, based on the coordinate information, a metadata information unit corresponding to the segmentation region; and therefore establish a correspondence between the segmentation region and the corresponding metadata information unit. The preset location may include one or more of the following locations: an upper left corner, a center, a lower right corner, an upper left corner, a lower right corner, and the like. For example, for the segmentation region 1, an upper left corner, a center corner, and a lower right corner may be selected as the preset location. Coordinate information of the upper left corner is (x1, y1), coordinate information of the center is (x2, y2), and coordinate information of the lower right corner is (x3, y3). Then, the metadata information unit including (x1, y1), (x2, y2), and (x3, y3) is determined, so that the metadata information unit corresponding to the segmentation region 1 may be obtained.

It should be understood that for any metadata information unit, the display end device 402 may further determine, based on one or more pieces of coordinate information included in the metadata information unit, at least one segmentation region corresponding to the one or more pieces of coordinate information; and establish a correspondence between the metadata information unit and the corresponding at least one segmentation region.

For an $i^{th}$ pixel in the to-be-displayed image frame (where i is any positive integer from 1 to N, and N is a quantity of pixels included in the to-be-displayed image frame), the display end device 402 performs the following step 503 to step 505 (it should be understood that any pixel is used as an example in the following embodiments, and processing processes of other pixels included in the to-be-displayed image frame are similar, and are not described one by one in the following embodiments).

Step 503: Determine, based on a plurality of pixels included in a preset region selected for the $i^{th}$ pixel, at least one related segmentation region to which the plurality of pixels belong, and determine, based on the correspondence, a related metadata information unit corresponding to each related segmentation region.

The preset region selected for the $i^{th}$ pixel is a region that is selected by using the $i^{th}$ pixel as a center and that is of a preset shape in a preset size, for example, the preset shape may be a rectangle or another shape with a preset width and a preset length; a region that is determined by using the $i^{th}$ pixel as a center and based on a preset shape and preset size information that is included in the metadata, where if the preset shape is a rectangle, the preset size information may be length and width information of the rectangle, or if the preset shape is a circle, the preset size information may be radius or diameter information of the circle; or a region that is determined by using the $i^{th}$ pixel as a center and based on a preset shape and preset size information that are included in the metadata. In other words, the preset shape or the preset size information of the preset shape or both that are used by the display end device 402 to select the preset region for the $i^{th}$ pixel may be information locally stored, or may be information indicated in the metadata.

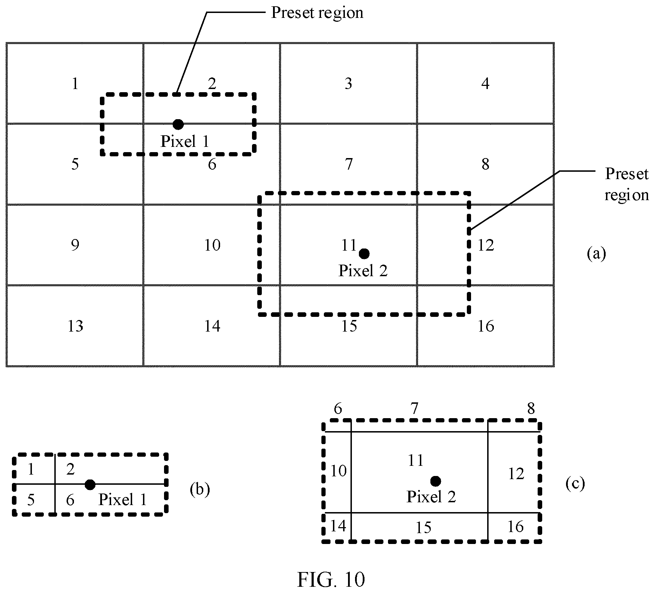

For example, FIG. 10 is a schematic diagram of determining a related segmentation region according to an embodiment of this application. The to-be-displayed image frame is obtained in the segmentation manner applied in FIG. 6. With reference to content shown in (a) and (b) in FIG. 10, when a pixel 1 is processed, a rectangular preset region with the pixel 1 as a center includes a plurality of pixels. The plurality of pixels belong to a segmentation region 1, a segmentation region 2, a segmentation region 5, and a segmentation region 6. In this case, it may be determined that there are four related segmentation regions for the pixel 1. With reference to content shown in (a) and (c) in FIG. 10, when the pixel 2 is processed, a plurality of pixels included in a rectangular preset region with the pixel 2 as a center belong to segmentation regions 6, 7, 8, 10, 11, 12, 14, 15, and 16. In this case, it may be determined that there are nine related segmentation regions for the pixel 2. It should be understood that a related segmentation region of a pixel is determined based on a pixel location and a preset region, and quantities of related segmentation regions of different pixels included in the to-be-displayed image frame may be the same or different. It should be noted that a plurality of pixels included in the to-be-displayed image frame may usually use preset regions with same preset size information. However, this is not limited in this application, and preset regions with different preset size information may also be used during implementation. The pixel 1 and the pixel 2 shown in FIG. 10 use different preset size information.

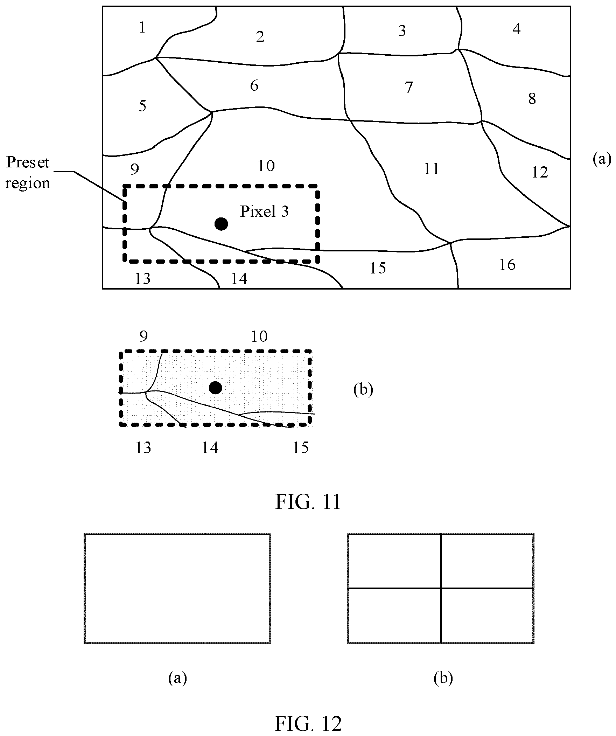

For another example, FIG. 11 is another schematic diagram of determining a related segmentation region according to an embodiment of this application. The to-be-displayed image frame is obtained in the segmentation manner applied in FIG. 8. When a pixel 3 is processed, a plurality of pixels included in a rectangular preset region with the pixel 3 as a center belong to segmentation regions 9, 10, 13, 14, and 15. In this case, it may be determined that there are five related segmentation regions for the pixel 3.

Based on that the display end device 402 may obtain the correspondence between the plurality of segmentation regions and the at least one metadata information unit in step 502, after the related segmentation region of the pixel is determined, key information included in the related segmentation region, for example, the parameter of the tone mapping curve, the dynamic metadata, the static metadata, and other metadata information, may be further obtained from the metadata information unit corresponding to the related segmentation region, to implement tone mapping of a to-be-processed pixel.

Step 504: The display end device 402 obtains, based on the related metadata information unit, a tone mapping subvalue corresponding to each related segmentation region, and allocates a corresponding weighting factor to each related segmentation region.

For example, the display end device 402 may obtain, based on the tone mapping curve, a tone mapping subvalue corresponding to the $i^{th}$ pixel in the related segmentation region, where the related metadata information unit includes the parameter of the tone mapping curve. It may be understood that a quantity of tone mapping subvalues of the $i^{th}$ pixel depends on a quantity of related segmentation regions. For example, for the pixel 1 shown in FIG. 10, if a quantity of related segmentation regions of the pixel 1 is four, four tone mapping subvalues corresponding to the pixel 1 may be obtained. For the pixel 2 shown in FIG. 10, if a quantity of related segmentation regions of the pixel 2 is nine, nine tone mapping subvalues corresponding to the pixel 2 may be obtained.

The parameter of the tone mapping curve included in the related data information unit described in the foregoing example is not limited during implementation of this application. For example, the parameter of the tone mapping curve may be determined based on a form of the selected tone mapping curve. The form of the tone mapping curve includes but is not limited to an S (sigmoidal) function curve, a cubic (or multiple) spline function curve, a Bezier curve, a gamma function curve, and the like.

In an embodiment of obtaining the tone mapping curve based on the parameter of the tone mapping curve, the tone mapping curve is a cubic spline function. During implementation of this application, that the display end device 402 determines a tone mapping curve of any related segmentation region may include the following steps.

A1: Obtain a maximum luminance value (maxLum) from a related metadata information unit corresponding to the related segmentation region.

A2: Determine an interval length (Len) of a cubic spline based on maxLum and cubic spline interval information (Num3). Len may be expressed as Equation (2-1):

$$\text{Len} = \frac{\text{maxLum}}{\text{Num3}} \tag{2-1}$$

A3: Obtain a start location (TH[index-1]) and an end location (TH[index]) of a first interval based on Len and an interval index (index, for identifying the first interval), where the first interval is any interval of a plurality of intervals included in the cubic spline. TH[index] may be expressed as Equation (2-2):

$$\text{TH[index]}=\text{index}\times\text{Len} \tag{2-2}$$

A4: Obtain cubic spline parameters P0, P1, P2, and P3 of the first interval based on the cubic spline interval information, the interval index, and a cubic spline interval value.

A4-1: Obtain an initial interval slope of the first interval based on the cubic spline interval value and the cubic spline interval information. The initial interval slope may be expressed as Equation (2-3):

$$\text{gainOrg[index]} = \frac{\text{THValue[index]}-\text{THValue[index}-1]}{\text{TH[index]}-\text{TH[index}-1]} \tag{2-3}$$

gainOrg[index] indicates the initial interval slope of the first interval. THValue[index] Indicates the cubic spline interval value of the first interval, and THValue[index - 1] indicates a cubic spline interval value of a previous interval of the first interval.

A4-2: Obtain an interval endpoint slope of the first interval based on the initial interval slope. The interval endpoint slope includes a start interval endpoint slope that may be expressed as the following Equation (2-4) and an end interval endpoint slope that may be expressed as the following Equation (2-5):

$$\text{gainStart[index]} = \frac{\text{gainOrg[index]}+\text{gainOrg[index}-1]}{2} \tag{2-4}$$

gainOrg[index-1] indicates an initial interval slope of the previous interval of the first interval. gainStart[index] indicates the start interval endpoint slope.

$$\text{gainEnd[index]} = \frac{\text{gainOrg[index]}+\text{gainOrg[index}+1]}{2} \tag{2-5}$$

gainOrg[index + 1] indicates an initial interval slope of a next interval of the first interval. gainEnd[index] indicates the end interval endpoint slope.

A4-3: Cubic spline parameters P0, P1, P2, and P3 of the first interval may be expressed as the following Equations (2-6) to (2-9):

$$P0 = THValue[index-1] \tag{2-6}$$

$$P1 = gainStart[index] \tag{2-7}$$

$$P2 = \frac{3 \times ValueA - ValueB \times ValueC}{ValueC \times ValueC} \tag{2-8}$$

$$P3 = \frac{ValueB \times ValueC - 2 \times ValueA}{ValueC \times ValueC \times ValueC} \tag{2-9}$$

ValueA, ValueS, and ValueC in Equation (2-8) and Equation (2-9) are intermediate values, and may be obtained through calculation in the following manner:

$$ValueA = THValue[index] - gainStart[index] \times ValueC - THValue[index-1]$$

$$ValueB = gainEnd[index] - gainStart[index]$$

$$ValueC = TH[index] - TH[index-1]$$

A5: An expression of a function corresponding to the tone mapping curve of the related segmentation region may be obtained based on the cubic spline parameters P0, P1, P2, and P3, and may be expressed as the following Equation (2-10):

$$L' = H(L) = P0 + P1 \times (L - TH[index-1]) + P2 \times (L - TH[index-1])^2 + P3 \times (L - TH[index-1])^2 \tag{2-10}$$

L indicates the linear signal value, and the value is normalized to [0, 1]. I, indicates the nonlinear signal value, and a range of the value is [0, 1]. H (L) indicates the function corresponding to the tone mapping curve.
In another embodiment of obtaining the tone mapping curve based on the parameter of the tone mapping curve, the expression of the function corresponding to the tone mapping curve may alternatively be expressed as the following Equation (2-11):

$$L' = F(L) = a \times \left( \frac{p \times L^n}{(p-1) \times L^n + 1} \right)^m + b \tag{2-11}$$

L indicates the linear signal value, and the value is normalized to [0, 1]. I, indicates the nonlinear signal value, and a range of the value is [0, 1]. F(L) indicates the function corresponding to the tone mapping curve. a. b, p, m, and n indicate the parameter of the tone mapping curve, and are used to adjust the form of the tone mapping curve. It should be understood that different segmentation regions may correspond to different parameters of the function of the tone mapping curve described in (2-11). During implementation, a parameter of a tone mapping curve in each segmentation region may be indicated in a corresponding metadata information unit.
It should be noted that during implementation, based on different forms of the tone mapping curve, different functions of the tone mapping curve may be used. The selected tone mapping curve is not limited in this application.
After obtaining the tone mapping curve corresponding to the related segmentation region, the display end device 402 performs tone mapping on the $i^{th}$ pixel based on the tone mapping curve to obtain the tone mapping subvalue of the pixel in the related segmentation region. For example, for the pixel 3 in FIG. 11, a total of five tone mapping subvalues including a tone mapping subvalue 1 corresponding to the segmentation region 9, a tone mapping subvalue 2 corresponding to the segmentation region 10, a tone mapping subvalue 3 corresponding to the segmentation region 13, a tone mapping subvalue 4 corresponding to the segmentation region 14, and a tone mapping subvalue 5 corresponding to the segmentation region 15 may be obtained.
In an embodiment of tone mapping, the display end device 402 may perform a luminance adjustment process and/or a color adjustment process on the $i^{th}$ pixel based on the tone mapping curve. Optionally, color adjustment performed on the ith pixel may be expressed as the following Equation (3-1):

$$\text{gain} = \frac{f[id](\max(Rp,Gp,Bp))}{(\max(Rp,Gp,Bp))} \qquad (3\text{-}1)$$

Rp, Gp, and Bp indicate three color components of the ith pixel. f[id] indicates the function corresponding to the tone mapping curve, for example, H(L) and F(L) described above. id indicates the segmentation region identifier.

The tone mapping subvalue of the ith pixel in the related segmentation region may be expressed as the following Equations (3-2) to (3-4):

$$RpTM[i] = Rp \times \text{gain} \qquad (3\text{-}2)$$

$$GpTM[i] = Gp \times \text{gain} \qquad (3\text{-}3)$$

$$BpTM[i] = Bp \times \text{gain} \qquad (3\text{-}4)$$

RpTM[i], GpTM[i], and BpTM[i] may indicate the tone mapping subvalue of the ith pixel in the related segmentation region.

For another example, the display end device 402 determines the tone mapping subvalue corresponding to each related segmentation region, and may further determine a weighting factor corresponding to each related segmentation region. Therefore, the degree of influence of the tone mapping subvalue of each related segmentation region on the tone mapping value of the ith pixel is determined based on the weighting factor.

Optionally, during implementation of this application, the display end device 402 may allocate the corresponding weighting factor to each related segmentation region. In addition, the display end device 402 may determine the weighting factor in a preset manner, or may determine the weighting factor according to the indication of the metadata. This application provides the following two possible methods for determining the weighting factor. During implementation, one or a combination of the following methods may be used, and the following two methods are not limited during actual implementation.

Method 1: Separately determine a quantity of pixels belonging to the preset region in each related segmentation region and a total quantity of pixels corresponding to the preset region; and for a first related segmentation region, perform the following operation: allocating a corresponding first weighting factor to the first related segmentation region based on a quantity of pixels belonging to the preset region in the first related segmentation region and the total quantity of pixels, where the first related segmentation region is any one of the at least one related segmentation region.

For example, with reference to the pixel 3 shown in FIG. 11, the quantity of pixels belonging to the preset region in each related segmentation region and the total quantity of pixels corresponding to the preset region may be described in the following Table 2-1.

**Table 2-1**

| Name | Quantity of pixels | First weighting factor |
|---|---|---|
| Segmentation region 9 | Num[1] | Weight1[1] |
| Segmentation region 10 | Num[2] | Weight1[2] |
| Segmentation region 13 | Num[3] | Weight1[3] |
| Segmentation region 14 | Num[4] | Weight1[4] |
| Segmentation region 15 | Num[5] | Weight1[5] |
| Preset region | $\sum_{1}^{5} \text{Num}[id]$ | |

Num[id] indicates a quantity of pixels of a segmentation region included in the preset region, for example, a quantity of pixels included in each related segmentation region of the pixel 3 in the preset region shown in (b) in FIG. 11, and id indicates the segmentation region identifier. Weight1[id] indicates the first weighting factor of the segmentation region id.

Optionally, the first weighting factor may be in a positive correlation to the quantity of pixels in the segmentation region, for example, in a linear relationship. In other words, a larger quantity of pixels in the segmentation region indicates a larger first weighting factor corresponding to the segmentation region, and the increase is linear.

Alternatively optionally, the positive correlation may be an exponential relationship, and the exponential relationship may be determined based on a first weighted strength value. The first weighted strength value is used to adjust the first weighting factor based on a pixel quantity distribution status of the to-be-displayed image frame. For example, adjusting the first weighting factor by using the first weighted strength value may be expressed as the following Equation (4-1):

$$\text{Weight1}[n] = (\frac{\text{Num}[id]}{\sum_1^5 \text{Num}[id]})^{\text{NumStr}[id]} \qquad (4\text{-}1)$$

NumStr[id] indicates the first weighted strength value, and may be, for example, 2 or 0.5. The first weighted strength value may be determined based on a pixel similarity of the plurality of segmented regions in the to-be-displayed image frame. For example, if pixels of the plurality of segmentation regions are similar pixels, a large first weighted strength value may be set. Otherwise, a smaller first weighted strength value may be set. It should be understood that the first weighted strength value may be determined by the display end device 402 based on a preset rule, or may be indicated by the capture end device 401 in the metadata. This is not limited in this application. In this way, the first weighted strength value is set, so that when a local feature of the to-be-displayed image frame is obvious, boundary effect between the segmentation regions can be reduced based on the smaller first weighted strength value, for example, 0.5.

Method 2: Separately determine a preset feature value corresponding to the preset region in each related segmentation region and a preset feature value of the ith pixel; and for a second related segmentation region, perform the following operation: allocating a corresponding second weighting factor to the second related segmentation region based on a feature difference between a preset feature value corresponding to a partial region of the preset region in the second related segmentation region and the preset feature value of the ith pixel, where the second related segmentation region is any one of the at least one related segmentation region. The preset feature value is a luminance feature value (AvgLum[id]), a color feature value (AvgRGB[id][3], where [3] indicates three color components), or the like. It should be understood that a same preset feature value is selected as the preset feature value corresponding to the preset region in the related segmentation region and the preset feature value of the ith pixel.

There is at least one preset feature value. For example, there may be four luminance feature values (AvgLum[id](4)) in one segmentation region, and there may also be four color feature values (AvgRGB[id](4)[3]) in one segmentation region. FIG. 12 is a schematic diagram of a luminance feature value according to an embodiment of this application. A scenario in which there is one luminance feature value is shown in (a) in FIG. 12, and a scenario in which there are four luminance feature values is shown in (b) in FIG. 12. A quantity of luminance feature values may be obtained based on luminance values having a largest quantity or an average largest quantity in the segmentation region.

In the foregoing example, when there are four preset feature values, during implementation of this application, a target preset feature value selected from the four preset feature values may be further determined based on a correspondence between central coordinates (x, y) of a partial region of the preset region in the second related segmentation region (or coordinates (x, y) of the ith pixel (a current pixel)) and central coordinates (xR, yR) of the second related segmentation region. For example, with reference to content shown in (b) in FIG. 12, the upper left region is a luminance feature value 1, the upper right region is a luminance feature value 2, the lower left region is a luminance feature value 3, and the lower right region is a luminance feature value 4. When x≤xR and y≥yR, the luminance feature value 1 is used. When x>xR and y≥yR, the luminance feature value 2 is used. When x≤xR and y<yR, the luminance feature value 3 is used. When x>xR and y<yR, the luminance feature value 4 is used.

For example, with reference to the pixel 3 shown in FIG. 11, in an example in which the preset region feature is a luminance feature value, a luminance feature value belonging to the preset region in each related segmentation region and a luminance feature value of the ith pixel may be described in the following Table 2-2.

**Table 2-2**

| Name | Luminance feature value | Second weighting factor |
|------|------------------------|------------------------|
| Segmentation region 9 | AvgLum[1] | Weight2[1] |
| Segmentation region 10 | AvgLum[2] | Weight2[2] |
| Segmentation region 13 | AvgLum[3] | Weight2[3] |

(continued)

| Name | Luminance feature value | Second weighting factor |
|---|---|---|
| Segmentation region 14 | AvgLum[4] | Weight2[4] |
| Segmentation region 15 | AvgLum[5] | Weight2[5] |
| $i^{th}$ pixel | AvgLum[i] | |

AvgLum[id] indicates a luminance feature value of the segmentation region included in the preset region, for example, a luminance feature value of the partial region belonging to the preset region in the related segmentation region of the pixel 3 shown in (b) in FIG. 11, and id indicates the segmentation region identifier. Weight2[id] indicates the second weighting factor of the segmentation region id.

Optionally, the second weighting factor may be in a negative correlation to a difference value between the luminance feature value of the segmented area and the luminance feature value of the $i^{th}$ pixel, for example, in a linear relationship. In other words, a larger difference value between the luminance feature value of the segmented region and the luminance feature value of the $i^{th}$ pixel indicates a smaller second weighting factor corresponding to the segmented region, and the decrease is linear.

Alternatively optionally, the positive correlation may be an exponential relationship, and the exponential relationship may be determined based on a second weighted strength value. The second weighted strength value is used to adjust the second weighting factor based on a preset feature value change status of the to-be-displayed image frame. For example, adjusting the second weighting factor by using the second weighted strength value may be expressed as the following Equation (4-2):

$$\text{Weight2}[n] = \text{max} - (\text{clip}(\text{min}, \text{max}, \frac{|(g(\text{AvgLum}[id]) - g(\text{AvgLum}[i]))|}{K}))^{\text{AvgLumStr}[id]} \qquad (4\text{-}2)$$

g() indicates a normalization operation. For example, a signal is divided by a maximum value of the signal to a range from 0 to 1. clip() indicates a clamp operation. min is a minimum value (for example, 0). max is a maximum value (for example, 1). A value that is of a third operand included in clip() and that is greater than max or less than min is truncated to max and min respectively. For example, if the value of the third operand included in clip() is less than min, min is used. If the third operand included in clip() is greater than max, max is used. K is a preset value and ranges from 0 to 1023. AvgLumStr[id] indicates the second weighted strength value, and may be, for example, 2 or 0.5.

For example, the second weighted strength value may be determined based on pixel luminance changes of the plurality of segmentation regions in the to-be-displayed image frame. For example, if the pixel luminance changes of the plurality of segmentation regions are obvious, a large second weighted strength value may be set. Otherwise, a smaller second weighted strength value may be set. It should be understood that the second weighted strength value may be determined by the display end device 402 based on a preset rule, or may be indicated by the capture end device 401 in the metadata. This is not limited in this application. In this way, the second weighted strength value is set, so that when a local feature of the to-be-displayed image frame is obvious, boundary effect between the segmentation regions can be reduced based on the smaller second weighted strength value, for example, 0.5.

Optionally, the weighting factor corresponding to each related segmentation region may be the first weighting factor, and may be obtained through calculation according to Equation (4-1), that is, Weight[id] = Weight1[id]; may be the second weighting factor, and may be obtained through calculation according to Equation (4-2), that is, Weight[id] = Weight2 [id]; or may be determined based on both the first weighting factor and the second weighting factor, and may be expressed as the following Equation (4-3):

$$\text{Weight}[id] = W(\text{Weight1}[id], \text{Weight2}[id]) \qquad (4\text{-}3)$$

W() indicates a preset function that is used to obtain, based on the first weighting factor and the second weighting factor, the weighting factor corresponding to the related segmentation region. The preset function may be multiplication, addition, or the like, and may be preset.

Step 505: The display end device 402 obtains a tone mapping value of the $i^{th}$ pixel based on the tone mapping subvalue corresponding to each related segmentation region and the weighting factor, and performs tone mapping on the $i^{th}$ pixel based on the tone mapping value.

For example, in this application, the tone mapping value of the $i^{th}$ pixel may be obtained according to the following Equations (5-1) to (5-5):

$$MaxRGBP = max(Rp, Gp, Bp) \tag{5-1}$$

$$gain[id] = \frac{spline[id](MaxRGBP)}{MaxRGBP} \tag{5-2}$$

$$Rtm = \frac{\sum_1^Z(Rp \times gain[id] \times Weight[id])}{\sum_1^Z Weight[id]} \tag{5-3}$$

$$Gtm = \frac{\sum_1^Z(Gp \times gain[id] \times Weight[id])}{\sum_1^Z Weight[id]} \tag{5-4}$$

$$Btm = \frac{\sum_1^Z(Bp \times gain[id] \times Weight[id])}{\sum_1^Z Weight[id]} \tag{5-5}$$

Z indicates a quantity of related segmentation regions of the $i^{th}$ pixel. Rtm, Gtm, and Btm indicate the tone mapping value. spline[id] indicates the function corresponding to the tone mapping curve, id indicates the segmentation region identifier.

In addition, during implementation of this application, the tone mapping value may alternatively be transformed from Rtm, Gtm, and Btm to color space to obtain Ytm, Utm, and Vtm. Correspondingly, the tone mapping subvalues are Yp, Up, and Vp.

Further, during implementation of this application, after obtaining the tone mapping value of the $i^{th}$ pixel, the display end device 402 may further perform saturation adjustment on the to-be-displayed image frame. In other words, the display end device 402 performs saturation adjustment on the $i^{th}$ pixel based on the initial pixel value of the $i^{th}$ pixel and the tone mapping value obtained in step 505.

It should be noted that, in the foregoing example, information required for calculating the tone mapping value of each pixel may be processed by the display end device 402, or may be obtained by the capture end device 401 through calculation and indicated to the display end device 402 by using the metadata. In other words, content that needs to be processed by each of the display end device 402 and the capture end device 401 may be allocated based on a calculation capability. This is not limited in this application. It may be understood that the display end device 402 may subsequently perform tone mapping on the to-be-displayed image frame based on the information indicated in the metadata.

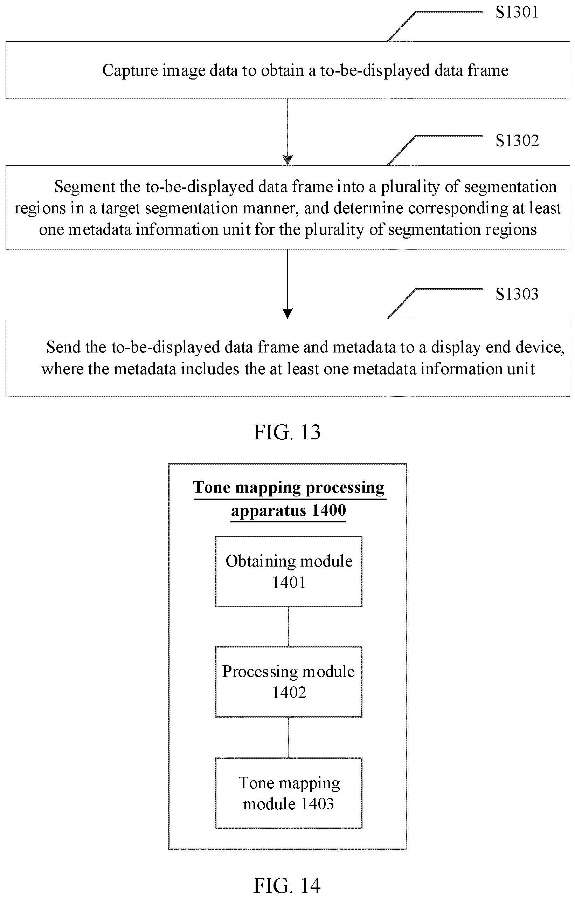

FIG. 13 is another schematic flowchart of a tone mapping method according to an embodiment of this application. The method is applicable to the capture end device 401 shown in FIG. 4.

Step 1301: Capture image data to obtain a to-be-displayed data frame. For example, the image data may be captured by the capture end device 401 by using an image capturing apparatus, or may be produced and generated by the capture end device 402 by using a preset application program.

Step 1302: Segment the to-be-displayed data frame into a plurality of segmentation regions in a target segmentation manner, and determine corresponding at least one metadata information unit for the plurality of segmentation regions. For example, the target segmentation manner may be the plurality of segmentation manners described in the foregoing content, for example, the segmentation manner A shown in FIG. 6, the segmentation manner B shown in FIG. 7, the segmentation manner C shown in FIG. 8, and the like. In addition, the capture end device 401 and a display end device 402 use a same segmentation manner. In addition, the capture end device 401 may further indicate the target segmentation manner to the display end device 402 by using metadata. In addition, the capture end device 402 may further indicate, to the display end device 402 by using the metadata, a first segmentation parameter, a second segmentation parameter, and the like that may be used in the target segmentation manner.

For example, for the segmentation manner A, the capture end device may determine a segmentation quantity in a vertical direction based on histograms of different rows in the image data, and determine a segmentation quantity in a horizontal direction based on histograms of different columns in the image data.

In another example, for the segmentation manner B, the capture end device may perform clustering based on histograms of different rows in the image data to determine a segmentation list in a vertical direction, and perform clustering based on histograms of different columns in the image data to determine a segmentation list in a horizontal direction.

Step 1303: Send the to-be-displayed data frame and the metadata to the display end device 402, where the metadata includes the at least one metadata information unit.

It should be understood that, to reduce a calculation amount of the display end device 402 and balance content that needs to be separately processed by the capture end device 401 and the display end device 402, during implementation of this application, the capture end device 401 may obtain information such as a first weighted strength value, a second weighted strength value, and a preset feature value of a segmentation region through calculation, and indicate to the display end device 402 by using the metadata. It should be noted that an implementation process of processing performed by the capture end device 401 is similar to described content of the display end device 402. Therefore, details are not described again.

According to an invention concept the same as that of the foregoing method, an embodiment of this application provides a tone mapping processing apparatus 1400. The tone mapping processing apparatus 1400 may be applicable to the foregoing display end device 402. As shown in FIG. 14, the apparatus may include an obtaining module 1401, a processing module 1402, and a tone mapping module 1403.

The obtaining module 1401 is configured to obtain a to-be-displayed image frame and metadata, where the metadata includes at least one metadata information unit. The processing module 1402 is configured to segment the to-be-displayed image frame into a plurality of segmentation regions in a target segmentation manner, and determine a correspondence between the plurality of segmentation regions and the at least one metadata information unit. The tone mapping module 1403 is configured to: for an $i^{th}$ pixel in the to-be-displayed image frame, perform the following operations: determining, based on a plurality of pixels included in a preset region selected for the $i^{th}$ pixel, at least one related segmentation region to which the plurality of pixels belong, and determining, based on the correspondence, a related metadata information unit corresponding to each related segmentation region; obtaining, based on the related metadata information unit, a tone mapping subvalue corresponding to each related segmentation region, and allocating a corresponding weighting factor to each related segmentation region; and obtaining a tone mapping value of the $i^{th}$ pixel based on the tone mapping subvalue corresponding to each related segmentation region and the weighting factor, and performing tone mapping on the $i^{th}$ pixel based on the tone mapping value, where i is any positive integer from 1 to N, and N is a quantity of pixels included in the to-be-displayed image frame.

In a possible design, when configured to allocate a corresponding weighting factor to each related segmentation region, the tone mapping module 1403 is specifically configured to: separately determine a quantity of pixels belonging to the preset region in each related segmentation region and a total quantity of pixels corresponding to the preset region; and for a first related segmentation region, perform the following operation: allocating a corresponding first weighting factor to the first related segmentation region based on a quantity of pixels belonging to the preset region in the first related segmentation region and the total quantity of pixels, where the first related segmentation region is any one of the at least one related segmentation region; and/or separately determine a preset feature value corresponding to the preset region in each related segmentation region; and for a second related segmentation region, perform the following operation: allocating a corresponding second weighting factor to the second related segmentation region based on a feature difference between a preset feature value corresponding to the preset region in the second related segmentation region and a preset feature value of the $i^{th}$ pixel, where the second related segmentation region is any one of the at least one related segmentation region.

In a possible design, the metadata further includes one or a combination of the following information: a first weighted strength value or a second weighted strength value. The first weighted strength value is used to adjust the first weighting factor based on a pixel quantity distribution status of the to-be-displayed image frame. The second weighted strength value is used to adjust the second weighting factor based on a preset feature value change status of the to-be-displayed image frame.

In a possible design, the preset feature value is one of the following feature values: a luminance feature value or a color feature value. There is at least one preset feature value.

In a possible design, when configured to obtain, based on the related metadata information unit, a tone mapping subvalue corresponding to each related segmentation region, the tone mapping module 1403 is specifically configured to obtain, based on a tone mapping curve, a tone mapping subvalue corresponding to the $i^{th}$ pixel in the related segmentation region, where the related metadata information unit includes a parameter of the tone mapping curve.

In a possible design, the preset region selected for the $i^{th}$ pixel is a region that is selected by using the $i^{th}$ pixel as a center and that is of a preset shape in a preset size; a region that is determined by using the $i^{th}$ pixel as a center and based on a preset shape and preset size information that is included in the metadata; or a region that is determined by using the $i^{th}$ pixel as a center and based on a preset shape and preset size information that are included in the metadata.

In a possible design, when configured to determine a correspondence between the plurality of segmentation regions and the at least one metadata information unit, the processing module 1402 is specifically configured to: for any segmentation region, select a pixel at a preset location from the segmentation region, and obtain coordinate information of the pixel at the preset location; determine, based on the coordinate information, a metadata information unit corresponding to the segmentation region; and establish a correspondence between the segmentation region and the corresponding metadata information unit; or for any metadata information unit, determine, based on one or more pieces of coordinate information included in the metadata information unit, at least one segmentation region corresponding to the one or more pieces of coordinate information; and establish a correspondence between the metadata information unit and the corresponding at least one segmentation region.

In a possible design, when configured to determine a correspondence between the plurality of segmentation regions and the at least one metadata information unit, the processing module 1402 is specifically configured to traverse the plurality of segmentation regions based on a target scanning sequence and a segmentation region identifier, to determine a metadata information unit corresponding to each segmentation region, where the metadata information unit includes the corresponding segmentation region identifier, and the target scanning sequence is a preset scanning sequence or a scanning sequence that is indicated in the metadata.

In a possible design, there is a one-to-one correspondence or a many-to-one correspondence between the plurality of segmentation regions and the at least one metadata information unit.

In a possible design, the target segmentation manner is a preset segmentation manner or a segmentation manner that is indicated in the metadata.

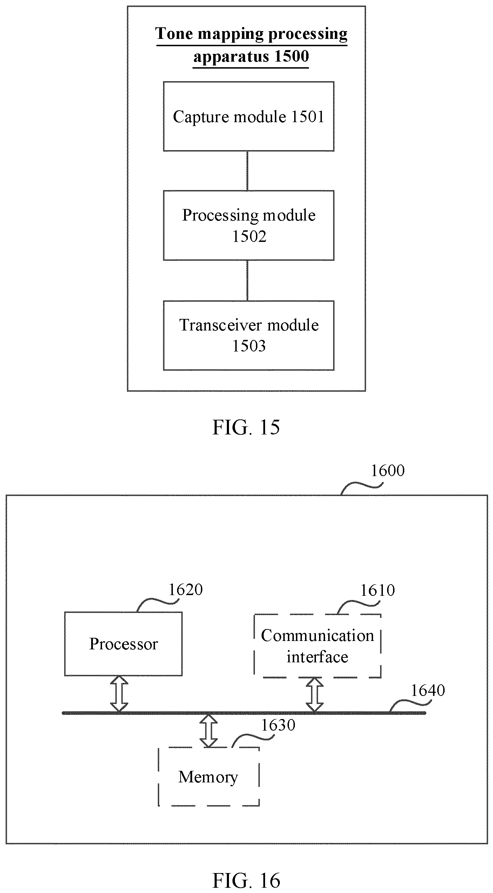

According to an invention concept the same as that of the foregoing method, an embodiment of this application provides a tone mapping processing apparatus 1400. The tone mapping processing apparatus 1500 may be applicable to the foregoing capture end device 401. As shown in FIG. 15, the apparatus 1500 may include a capture module 1501, a processing module 1502, and a transceiver module 1503.

The capture module 1501 is configured to capture image data to obtain a to-be-displayed data frame. The processing module 1502 is configured to segment the to-be-displayed data frame into a plurality of segmentation regions in a target segmentation manner, and determine corresponding at least one metadata information unit for the plurality of segmentation regions. The transceiver module 1503 is configured to send the to-be-displayed data frame and metadata to a display end device, where the metadata includes the at least one metadata information unit.

In a possible design, the processing module 1502 is further configured to: determine a first weighted strength value based on a quantity of pixels respectively included in the plurality of segmentation regions; and/or determine a second weighted strength value based on a preset feature value respectively corresponding to the plurality of segmentation regions; and associate the first weighted strength value and/or the second weighted strength value with the metadata.

In a possible design, the preset feature value is one of the following feature values: a luminance feature value or a color feature value. There is at least one preset feature value.

In a possible design, the metadata information unit includes a parameter of a tone mapping curve corresponding to a segmentation region.

In a possible design, the metadata further includes preset size information, and the preset size information indicates a preset size of a preset shape used when a preset region is selected for a pixel; or the metadata further includes a preset shape and preset size information.

In a possible design, when configured to determine corresponding at least one metadata information unit for the plurality of segmentation regions, the processing module 1502 is specifically configured to: select a plurality of pixels at preset locations from the segmentation region, and obtain coordinate information of the plurality of pixels at the preset locations; and associate the coordinate information with the metadata information unit.

In a possible design, the metadata information unit further includes a segmentation region identifier corresponding to the metadata information unit and a scanning sequence. The corresponding segmentation region identifier and the scanning sequence are used by the display end device to determine a correspondence between the plurality of segmentation regions and the at least one metadata information unit.

In a possible design, there is a one-to-one correspondence or a many-to-one correspondence between the plurality of segmentation regions and the at least one metadata information unit.

In a possible design, the processing module 1502 is further configured to associate the target segmentation manner with the metadata, to indicate the display end device to segment the to-be-displayed data frame in the target segmentation manner.

An embodiment of this application further provides an electronic device 1600. As shown in FIG. 16, the electronic device 1600 may be the display end device 402 or the capture end device 401 described in the foregoing implementations. The electronic device 1600 may include a communication interface 1610 and a processor 1620. Optionally, the electronic device 1600 may further include a memory 1630. The memory 1630 may be disposed inside the electronic device, or may be disposed outside the electronic device. The obtaining module 1401, the processing module 1402, and the tone mapping module 1403 shown in FIG. 14 may all be implemented by the processor 1620. Alternatively, the capture module 1501, the processing module 1502, and the transceiver module 1503 shown in FIG. 15 may also be implemented by the processor 1620. Optionally, the communication interface 1610, the processor 1620, and the memory 1630 may be connected to each other through a communication line 1640. The communication line 1640 may be a peripheral component interconnect (peripheral component interconnect, PCI for short) bus, an extended industry standard architecture (extended industry standard architecture, EISA for short) bus, or the like. The communication line 1640 may be classified into an address bus, a data bus, a control bus, and the like. For ease of representation, only one bold line is used to represent the bus in FIG. 16, but this does not mean that there is only one bus or only one type of bus.

In a possible implementation, the processor 1620 is configured to implement any method performed by a capture end in FIG. 13, and output, through the communication interface 1610, a bitstream that is encoded by the capture end, for example, a to-be-displayed image frame and metadata.

During implementation, steps in a processing process may be implemented by an integrated logic circuit of hardware in the processor 1620 or by instructions in a form of software, to perform the method performed by the capture end in FIG. 13. For brevity, details are not described herein again. Program code used by the processor 1620 to implement the foregoing method may be stored in the memory 1630. The memory 1630 is coupled to the processor 1620.

Any communication interface in embodiments of this application may be a circuit, a bus, a transceiver, or another apparatus that may be configured to exchange information, for example, the communication interface 1610 in the electronic device 1600. For example, the another apparatus may be a device connected to the electronic device 1600. For example, when the electronic device 1600 is the capture end device 401, the another apparatus may be the display end device 402 or the like.

The processor 1620 may cooperate with the memory 1630. The memory 1630 may be a nonvolatile memory, for example, a hard disk drive (hard disk drive, HDD) or a solid-state drive (solid-state drive, SSD), or may be a volatile memory (volatile memory), for example, a random access memory (random access memory, RAM). The memory 1630 is any other medium that can be configured to carry or store desired program code in a form of instructions or a data structure and that can be accessed by a computer, but is not limited thereto.

A specific connection medium between the communication interface 1610, the processor 1620, and the memory 1630 is not limited in embodiments of this application. In this embodiment of this application, the memory 1630, the processor 1620, and the communication interface 1610 are connected to each other through a bus in FIG. 16. The bus is represented by using a bold line in FIG. 16. A connection manner between other components is merely an example for description, and is not limited thereto. The bus may be classified into an address bus, a data bus, a control bus, and the like. For ease of representation, only one bold line is used to represent the bus in FIG. 16, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, or a discrete hardware component, and can implement or perform the methods, steps, and logical block diagrams disclosed in embodiments of this application. The general-purpose processor may be a microprocessor, or may be any conventional processor or the like. The steps of the method disclosed with reference to embodiments of this application may be directly performed by a hardware processor, or may be performed by a combination of hardware and software modules in the processor.

The coupling in embodiments of this application is indirect coupling or a communication connection between apparatuses or modules for information exchange between the apparatuses or the modules, and may be in electrical, mechanical, or other forms.

Based on the foregoing embodiments, an embodiment of this application further provides a computer storage medium. The storage medium stores a software program. When the software program is read and executed by one or more processors, the method provided in any one or more of the foregoing embodiments may be implemented. The computer storage medium may include any medium that can store program code, for example, a USB flash drive, a removable hard disk, a read-only memory, a random access memory, a magnetic disk, or an optical disc.

Based on the foregoing embodiments, an embodiment of this application further provides a chip. The chip includes a processor, configured to implement functions in any one or more of the foregoing embodiments. Optionally, the chip further includes a memory, and the memory is configured to store necessary program instructions and data to be executed by the processor. The chip may include a chip, or include a chip and another discrete device.

A person skilled in the art should understand that embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to embodiments of this application. It should be understood that computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

The computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to embodiments of this application without departing from the scope of embodiments of this application. This application is intended to cover these modifications and variations provided that these modifications and variations in embodiments of this application fall within the scope of the claims and their equivalent technologies of this application.

## Claims

1. A tone mapping method, applied to a display end device, wherein the method comprises:

   obtaining a to-be-displayed image frame and metadata, wherein the metadata comprises at least one metadata information unit;
   segmenting the to-be-displayed image frame into a plurality of segmentation regions in a target segmentation manner, and determining a correspondence between the plurality of segmentation regions and the at least one metadata information unit; and
   for an $i^{th}$ pixel in the to-be-displayed image frame, performing the following operations:

   determining, based on a plurality of pixels comprised in a preset region selected for the $i^{th}$ pixel, at least one related segmentation region to which the plurality of pixels belong, and determining, based on the correspondence, a related metadata information unit corresponding to each related segmentation region;
   obtaining, based on the related metadata information unit, a tone mapping subvalue corresponding to each related segmentation region, and allocating a corresponding weighting factor to each related segmentation region; and
   obtaining a tone mapping value of the $i^{th}$ pixel based on the tone mapping subvalue corresponding to each related segmentation region and the weighting factor, and performing tone mapping on the $i^{th}$ pixel based on the tone mapping value, wherein
   i is any positive integer from 1 to N, and N is a quantity of pixels comprised in the to-be-displayed image frame.

2. The method according to claim 1, wherein the allocating a corresponding weighting factor to each related segmentation region comprises one or a combination of the following manners:

   separately determining a quantity of pixels belonging to the preset region in each related segmentation region and a total quantity of pixels corresponding to the preset region; and for a first related segmentation region, performing the following operation: allocating a corresponding first weighting factor to the first related segmentation region based on a quantity of pixels belonging to the preset region in the first related segmentation region and the total quantity of pixels, wherein the first related segmentation region is any one of the at least one related segmentation region; and/or
   separately determining a preset feature value corresponding to the preset region in each related segmentation region; and for a second related segmentation region, performing the following operation: allocating a corresponding second weighting factor to the second related segmentation region based on a feature difference between a preset feature value corresponding to the preset region in the second related segmentation region and a preset feature value of the $i^{th}$ pixel, wherein the second related segmentation region is any one of the at least one related segmentation region.

3. The method according to claim 2, wherein the metadata further comprises one or a combination of the following information: a first weighted strength value or a second weighted strength value; and
   the first weighted strength value is used to adjust the first weighting factor based on a pixel quantity distribution status of the to-be-displayed image frame; and the second weighted strength value is used to adjust the second weighting factor based on a preset feature value change status of the to-be-displayed image frame.

4. The method according to claim 2 or 3, wherein the preset feature value is one of the following feature values: a luminance feature value or a color feature value.

5. The method according to claim 4, wherein there is at least one preset feature value.

6. The method according to claim 1, wherein the obtaining, based on the related metadata information unit, a tone mapping subvalue corresponding to each related segmentation region comprises:
obtaining, based on a tone mapping curve, a tone mapping subvalue corresponding to the $i^{th}$ pixel in the related segmentation region, wherein the related metadata information unit comprises a parameter of the tone mapping curve.

7. The method according to any one of claims 1 to 6, wherein the preset region selected for the $i^{th}$ pixel is a region that is selected by using the $i^{th}$ pixel as a center and that is of a preset shape in a preset size; a region that is determined by using the $i^{th}$ pixel as a center and based on a preset shape and preset size information that is comprised in the metadata; or a region that is determined by using the $i^{th}$ pixel as a center and based on a preset shape and preset size information that are comprised in the metadata.

8. The method according to claim 1, wherein the determining a correspondence between the plurality of segmentation regions and the at least one metadata information unit comprises:

for any segmentation region, selecting a pixel at a preset location from the segmentation region, and obtaining coordinate information of the pixel at the preset location; determining, based on the coordinate information, a metadata information unit corresponding to the segmentation region; and establishing a correspondence between the segmentation region and the corresponding metadata information unit; or
for any metadata information unit, determining, based on one or more pieces of coordinate information comprised in the metadata information unit, at least one segmentation region corresponding to the one or more pieces of coordinate information; and establishing a correspondence between the metadata information unit and the corresponding at least one segmentation region.

9. The method according to claim 1, wherein the determining a correspondence between the plurality of segmentation regions and the at least one metadata information unit comprises:
traversing the plurality of segmentation regions based on a target scanning sequence and a segmentation region identifier, to determine a metadata information unit corresponding to each segmentation region, wherein the metadata information unit comprises the corresponding segmentation region identifier, and the target scanning sequence is a preset scanning sequence or a scanning sequence that is indicated in the metadata.

10. The method according to any one of claims 1 to 9, wherein there is a one-to-one correspondence or a many-to-one correspondence between the plurality of segmentation regions and the at least one metadata information unit.

11. The method according to any one of claims 1 to 10, wherein the target segmentation manner is a preset segmentation manner or a segmentation manner that is indicated in the metadata.

12. A tone mapping method, applied to a capture end device, wherein the method comprises:

capturing image data to obtain a to-be-displayed data frame;
segmenting the to-be-displayed data frame into a plurality of segmentation regions in a target segmentation manner, and determining corresponding at least one metadata information unit for the plurality of segmentation regions; and
sending the to-be-displayed data frame and metadata to a display end device, wherein the metadata comprises the at least one metadata information unit.

13. The method according to claim 12, wherein the method further comprises:

determining a first weighted strength value based on a quantity of pixels respectively comprised in the plurality of segmentation regions; and/or

determining a second weighted strength value based on a preset feature value respectively corresponding to the plurality of segmentation regions; and

associating the first weighted strength value and/or the second weighted strength value with the metadata.

14. The method according to claim 13, wherein the preset feature value is one of the following feature values: a luminance feature value or a color feature value.

15. The method according to claim 14, wherein there is at least one preset feature value.

16. The method according to claim 12, wherein the metadata information unit comprises a parameter of a tone mapping curve corresponding to a segmentation region.

17. The method according to any one of claims 12 to 16, wherein the metadata further comprises preset size information, and the preset size information indicates a preset size of a preset shape used when a preset region is selected for a pixel; or

the metadata further comprises a preset shape and preset size information.

18. The method according to claim 12, wherein the determining corresponding at least one metadata information unit for the plurality of segmentation regions comprises:

selecting a plurality of pixels at preset locations from the segmentation region, and obtaining coordinate information of the plurality of pixels at the preset locations; and

associating the coordinate information with the metadata information unit.

19. The method according to claim 12, wherein the metadata information unit further comprises a segmentation region identifier corresponding to the metadata information unit and a scanning sequence; and

the corresponding segmentation region identifier and the scanning sequence are used by the display end device to determine a correspondence between the plurality of segmentation regions and the at least one metadata information unit.

20. The method according to any one of claims 12 to 19, wherein there is a one-to-one correspondence or a many-to-one correspondence between the plurality of segmentation regions and the at least one metadata information unit.

21. The method according to claim 12, wherein the method further comprises:

associating the target segmentation manner with the metadata, to indicate the display end device to segment the to-be-displayed data frame in the target segmentation manner.

22. A display end device, comprising a nonvolatile memory and a processor that are coupled to each other, wherein the processor invokes program code stored in the memory to perform the method according to any one of claims 1 to 11.

23. A capture end device, comprising a nonvolatile memory and a processor that are coupled to each other, wherein the processor invokes program code stored in the memory to perform the method according to any one of claims 12 to 21.

24. A tone mapping system, comprising the display end device according to claim 22 and the capture end device according to claim 23.

25. A computer-readable storage medium, wherein the computer-readable storage medium stores a computer program, and when the computer program is run on a processor, the method according to any one of claims 1 to 11 or claims 12 to 21 is implemented.

FIG. 1

**HLG OETF**

FIG. 2

SLF OETF

FIG. 3

FIG. 4

S501

Obtain a to-be-displayed image frame and metadata, where the metadata includes at least one metadata information unit

S502

Segment the to-be-displayed image frame into a plurality of segmentation regions in a target segmentation manner, and determine a correspondence between the plurality of segmentation regions and the at least one metadata information unit

S503

For an $i^{th}$ pixel in the to-be-displayed image frame, perform the following operations:

Determine, based on a plurality of pixels included in a preset region selected for the $i^{th}$ pixel, at least one related segmentation region to which the plurality of pixels belong, and determine, based on the correspondence, a related metadata information unit corresponding to each related segmentation region

S504

Obtain, based on the related metadata information unit, a tone mapping subvalue corresponding to each related segmentation region, and allocate a corresponding weighting factor to each related segmentation region

S505

Obtain a tone mapping value of the $i^{th}$ pixel based on the tone mapping subvalue corresponding to each related segmentation region and the weighting factor, and perform tone mapping on the $i^{th}$ pixel based on the tone mapping value

FIG. 5

Second direction: M2

First direction: M1

FIG. 6

h[1]

h[2]

h[3]

h[4]

Second direction: h[j2]

w[1]    w[2]    w[3]    w[4]

First direction: w[j1]

FIG. 7

FIG. 8

FIG. 9

Preset region

| 1 | 2 | 3 | 4 |
| 5 | 6 | 7 | 8 |
| 9 | 10 | 11 | 12 |
| 13 | 14 | 15 | 16 |

Pixel 1

Pixel 2

Preset region

(a)

| 1 | 2 |
| 5 | 6 |

Pixel 1

(b)

| 6 | 7 | 8 |
| 10 | 11 | 12 |
| 14 | 15 | 16 |

Pixel 2

(c)

FIG. 10

FIG. 11

FIG. 12

S1301

Capture image data to obtain a to-be-displayed data frame

S1302

Segment the to-be-displayed data frame into a plurality of segmentation regions in a target segmentation manner, and determine corresponding at least one metadata information unit for the plurality of segmentation regions

S1303

Send the to-be-displayed data frame and metadata to a display end device, where the metadata includes the at least one metadata information unit

FIG. 13

**Tone mapping processing apparatus 1400**

Obtaining module 1401

Processing module 1402

Tone mapping module 1403

FIG. 14

**Tone mapping processing apparatus 1500**

Capture module 1501

Processing module 1502

Transceiver module 1503

FIG. 15

1600

1620

1610

Processor

Communication interface

1640

1630

Memory

FIG. 16

## INTERNATIONAL SEARCH REPORT

| International application No. |
|---|
| **PCT/CN2022/104317** |

**A. CLASSIFICATION OF SUBJECT MATTER**

G06T 7/11(2017.01)i

According to International Patent Classification (IPC) or to both national classification and IPC

**B. FIELDS SEARCHED**

Minimum documentation searched (classification system followed by classification symbols)

G06T

Documentation searched other than minimum documentation to the extent that such documents are included in the fields searched

Electronic data base consulted during the international search (name of data base and, where practicable, search terms used)

CNABS, CNTXT, VEN, WOTXT, EPTXT, CNKI, USTXT, IEEE: 色调映射, 高动态图像, 分割, 分块, 权值, 像素点, tone mapping, HDR, segmentation, blocking, weight, pixel

**C. DOCUMENTS CONSIDERED TO BE RELEVANT**

| Category* | Citation of document, with indication, where appropriate, of the relevant passages | Relevant to claim No. |
|---|---|---|
| X | US 2015201109 A1 (MARVELL WORLD TRADE LTD.) 16 July 2015 (2015-07-16) description, paragraphs 19-26 | 1-25 |
| X | CN 107993189 A (FUZHOU ROCKCHIP ELECTRONICS CO., LTD.) 04 May 2018 (2018-05-04) description, paragraphs 82-109 | 1-25 |
| A | EP 3119088 A1 (THOMSON LICENSING et al.) 18 January 2017 (2017-01-18) entire document | 1-25 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **06 September 2022** | **16 September 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2022/104317**

| Patent document cited in search report | | | Publication date (day/month/year) | Patent family member(s) | | | Publication date (day/month/year) |
|---|---|---|---|---|---|---|---|
| US | 2015201109 | A1 | 16 July 2015 | WO | 2015105643 | A1 | 16 July 2015 |
| | | | | US | 9420145 | B2 | 16 August 2016 |
| CN | 107993189 | A | 04 May 2018 | CN | 107993189 | B | 18 June 2021 |
| EP | 3119088 | A1 | 18 January 2017 | | None | | |

Form PCT/ISA/210 (patent family annex) (January 2015)

**EP 4 390 843 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111080645